# EUROPEAN PATENT APPLICATION

(11) **EP 1 457 506 A1**
(43) Date of publication of application: **15.09.2004**
(21) Application number: 02803094.8
(22) Date of filing: 21.10.2002
(51) Int. Cl.: C08G 18/00, C08J 9/14

(54) **PROCESS FOR PRODUCING SYNTHETIC RESIN FOAM**

(30) Priority: 13.11.2001 JP 2001347711
(71) Applicant: Daikin Industries, Ltd., Osaka-shi, Osaka 530-8323 (JP)
(72) Inventor: SHIBANUMA, Takashi, c/o Yodogawa Seisakusho, Settsu-shi, Osaka 566-0044 (JP); TSUCHIYA, Tatsumi, c/o Yodogawa Seisakusho, Settsu-shi, Osaka 566-0044 (JP); YAMADA, Yasufu, c/o Yodogawa Seisakusho, Settsu-shi, Osaka 566-0044 (JP); SHIBATA, Noriaki, c/o Yodogawa Seisakusho, Settsu-shi, Osaka 566-0044 (JP)
(74) Representative: Luderschmidt, Schüler & Partner GbR
(86) International application number: PCT/JP2002/010886
(87) International publication number: WO 2003/042268

(57) **Abstract**

A process for producing a synthetic resin foam comprising the step of reacting a polyol with a polyisocyanate compound in the presence of a blowing agent to give a polyurethane or polyisocyanurate foam,
the blowing agent being a mixture of 51-90 wt.% 1,1,1,3,3-pentafluoropropane and 49-10 wt.% 1,1,1,3,3-pentafluorobutane.

## Description

### TECHNICAL FIELD

The present invention relates to a process for producing a polyurethane or polyisocyanurate foam, and also relates to a blowing agent and a premix usable in such a process.

### BACKGROUND OF THE INVENTION

Producing synthetic resin foams by reacting polyols with polyisocyanate compounds in the presence of catalysts and blowing agents has been widely practiced. Examples of synthetic resin foams thus obtained are polyurethane, polyisocyanurate, etc.

Trichlorofluoromethane (CFC-11) has been generally used as an organic blowing agent in the production of synthetic resin foams such as the aforementioned polyurethane foams.

In recent years, it has been pointed out that some types of chlorofluorocarbon (fron gas), once released in the atmosphere, deplete the ozone layer of the stratosphere or lead to global warming by the greenhouse effect, and, as a result, the ecosystem including humans may be severely adversely affected. Therefore, the use of chlorofluorocarbon posing a high risk of ozone layer depletion is restricted under international agreements, including the use of CFC-11. Accordingly, the development of novel blowing agents that are free from or have a small risk of ozone layer depletion or global warming is required.

As chlorofluorocarbons that have a low impact on the ozone layer, 1,1-dichloro-1-fluoroethane (HCFC-141b) and 1,1-dichloro-2,2,2-trifluoroethane are substituted for CFC-11.

However, these substances contain chlorine atoms in their molecular structure, and thus may still pose a risk of depleting the ozone layer.

Japanese Unexamined Patent Publication Nos. 29440/1990 and 235982/1990 disclose processes for producing foams using fluorinated hydrocarbons that do not contain chlorine and have no risk of ozone layer depletion. Moreover, Japanese Unexamined Patent Publication No. 239251/1993 discloses the use of 1,1,1,3,3-pentafluoropropane (hereinafter sometimes referred to as "HFC-245fa") as a blowing agent for plastic foam production.

HFC-245fa is a noncombustible hydrogen-containing fluorocarbon with a boiling point of 15°C; therefore, it is considered to have no risk of ozone layer depletion. Moreover, since HFC-245fa has a boiling point comparable to those of CFC-11 and HCFC-141b and is noncombustible, HFC-245fa is drawing attention as a leading candidate to substitute for HCFC-141b as a blowing agent.

The boiling point (15°C) of HFC-245fa is a little lower than that of CFC-11 (24°C) or HCFC-141b (32°C), although it is acceptable. Due to its low boiling point, when ambient temperatures are relatively high, HFC-245fa is easily vaporized making the production of foams difficult. Moreover, since the solubility of HFC-245fa in polyols is not necessarily sufficient, premixes containing HFC-245fa and polyols may suffer phase separation, thereby limiting the types of polyol usable in the production.

When blowing agents having a low boiling point or low solubility in polyols are used in the production of foams wherein polyols and isocyanate compounds are mixed and reacted, insufficient mixing and rough bubbles called voids are likely to occur and unreacted ingredients are likely to remain, thereby deteriorating the properties required of rigid urethane foams, such as mechanical strength and low thermal conductivity. Furthermore, it is difficult to handle HFC-245fa since HFC-245fa itself, or its mixture with ingredients for foam production (particularly, a mixture with polyols called a premix), reaches a very high vapor pressure under some meteorological conditions. Therefore, during transportation and storage, containers having a higher pressure resistance than those currently used are needed.

Thus, to effectively use HFC-245fa as a substitute for HCFC-141b, the development of techniques to control its boiling point, solubility, etc., is demanded.

In addition, Japanese Unexamined Patent Publication No. 235982/1990 discloses 1,1,1,3,3-pentafluorobutane (hereinafter sometimes referred to as "HFC-365mfc") as a blowing agent. The boiling point of HFC-365mfc is 40°C and thus, unlike HFC-245fa, higher than that of CFC-11 or HCFC-141b. Therefore, HFC-365mfc, unlike HFC-245fa, is free from the problems caused by the low boiling point.

However, HFC-365mfc has a flammability range (3.8-13.3%) and may be ignited. Blowing agents are preferably noncombustible. Noncombustibility is strongly required especially for blowing agents that are used at construction sites and like places. Moreover, the solubility of HFC-365mfc in polyols is slightly lower than that of HCFC-141b or CFC-11.

Thus, to effectively use HFC-365mfc as a substitute for HCFC-141b, the development of techniques to control its flammability, solubility, etc., is demanded.

Japanese Unexamined Patent Publication No. 506291/2001 discloses that a mixture comprising 50-99 wt.% HFC-365mfc and 1-50 wt.% other hydrofluorocarbons such as HFC245fa and the like can be used as a blowing gas in the production of foamed plastics such as foamed polyurethane. Presumably, the mixture disclosed in this publication poses a problem of flammability since it contains HFC-365mfc in a proportion of 50-99 wt.%.

U.S. Pat. No. 6,451,867 discloses a composition comprising 51-99 wt.% HFC-245fa and 1-49 wt.% HFC-365mfc. This reference discloses that when the composition contains HFC-245fa in a large proportion, the K-factor thereof, which is an index of thermal insulation properties, is improved over HFC-245fa or HFC-365mfc alone. However, this reference does not discuss the flammability of blowing agents or premixes.

Moreover, Japanese Unexamined Patent Publication No. 47323/2002 discloses the use of a hydrofluorocarbon as a blowing agent and a specific fluorine-containing surfactant in the production of rigid polyurethane foams. This publication discloses that a mixture of 5-95 wt.% HFC-245fa and 95-5 wt.% HFC-365mfc can be used as the hydrofluorocarbon. In this publication, the production of flame-retardant rigid polyurethane foams is dealt with as a problem to be solved; however, the flame retardancy of the premix is not discussed.

### DISCLOSURE OF THE INVENTION

Primary objects of the present invention are to provide a blowing agent that solves or reduces problems posed by HFC-245fa and HFC365mfc while maintaining the properties of HFC-245fa or HF-365mfc as blowing components; a process for producing a synthetic resin foam using the same; and a premix containing the same.

The inventors conducted extensive research in view of the prior art problems described above and found that the problems can be solved by using as a blowing agent a mixture comprising 1,1,1,3,3-pentafluoropropane and 1,1,1,3,3-pentafluorobutane in a specific proportion in a process for producing synthetic resin foams such as polyurethane, polyisocyanurate and the like wherein polyols and polyisocyanate compounds are reacted in the presence of the blowing agent. Accordingly the inventors accomplished the present invention.

In particular, the present invention relates to processes for producing synthetic resin foams, and to blowing agents and premixes as below:
Item 1. A process for producing a synthetic resin foam comprising the step of reacting a polyol with a polyisocyanate compound in the presence of a low-boiling organic blowing agent (hereinafter sometimes referred to as a "blowing agent") to give a polyurethane or polyisocyanurate foam, the low-boiling organic blowing agent being a mixture of 51-90 wt.% 1,1,1,3,3-pentafluoropropane and 49-10 wt.% 1,1,1,3,3-pentafluorobutane.
Item 2. The process according to item 1, wherein the low-boiling organic blowing agent comprises a mixture of 60-80 wt.% 1,1,1,3,3-pentafluoropropane and 40-20 wt.% 1,1,1,3,3-pentafluorobutane.
Item 3. A blowing agent for polyurethane or polyisocyanurate comprising a mixture of 51-90 wt.% 1,1,1,3,3-pentafluoropropane and 49-10 wt.% 1,1,1,3,3-pentafluorobutane.
Item 4. The blowing agent according to item 3 comprising a mixture of 60-80 wt.% 1,1,1,3,3-pentafluoropropane and 40-20 wt.% 1.,1,1,3,3-pentafluorobutane.
Item 5. A process for producing a resin foam comprising the step of reacting a polyol with a polyisocyanate compound in the presence of a low-boiling organic blowing agent to give a polyurethane or polyisocyanurate foam, the blowing agent and the polyol being used as a premix, the blowing agent being a mixture comprising 1,1,1,3,3-pentafluoropropane and 1,1,1,3,3-pentafluorobutane, the weight ratio of 1,1,1,3,3-pentafluoropropane/1,1,1,3,3-pentafluorobutane in the vapor phase of the premix being at least 1.5 at 25°C.
Item 6. The process for producing a resin foam according to item 5, wherein the low-boiling organic blowing agent is the mixture further comprising at least one halogen-containing compound with a boiling point of at least 15°C selected from the group consisting of halogenated hydrocarbons, halogenated alcohols and halogenated ethers.
Item 7. The process for producing a resin foam according to item 5 or 6, wherein the vapor pressure at 40°C of the premix obtained is 95% or less relative to the vapor pressure at 40°C of a premix which contains the same ingredients as the aforementioned premix except for not containing the halogen-containing compound with a boiling point of at least 15°C.
Item 8. The process for producing a resin foam according to item 5 or 6, wherein the low-boiling organic blowing agent is the mixture further comprising a glycol compound and/or a fluorine-containing surfactant.
Item 10. The process for producing a resin foam according to item 8, wherein the vapor pressure at 40°C of the premix is 95% or less relative to the vapor pressure at 40°C of a premix which has the same component weight ratio as the aforementioned premix except for not containing the glycol compound and/or the fluorine-containing surfactant. Item 11. A blowing agent for polyurethane or polyisocyanurate comprising 1,1,1,3,3-pentafluoropropane and 1,1,1,3,3-pentafluorobutane, wherein the weight ratio of 1,1,1,3,3-pentafluoropropane/1,1,1,3,3-pentafluorobutane in the vapor phase of a premix containing the blowing agent and a polyol is at least 1.5 at 25°C.
Item 12. The blowing agent according to item 11 further comprising at least one halogen-containing compound with a boiling point of at least 15°C selected from the group consisting of halogenated hydrocarbons, halogenated alcohols and halogenated ethers.
Item 13. The blowing agent according to item 12, wherein when a premix containing the blowing agent and a polyol is prepared, the vapor pressure at 40°C of the premix is 95% or less relative to the vapor pressure at 40°C of a premix which has the same weight ratio of the blowing agent and the same weight ratio of HFC-245fa to HFC-365mfc as the aforementioned premix except for not containing the halogen-containing compound with a boiling point of at least 15°C.
Item 14. The blowing agent according to item 11 or 12 further comprising a glycol compound and/or a fluorine-containing surfactant.
Item 15. The blowing agent according to item 14, wherein when a premix containing a polyol and the blowing agent is prepared, the vapor pressure at 40°C of the premix is 95% or less relative to the vapor pressure at 40°C of a premix which has the same component weight ratio as the aforementioned premix except for not containing the glycol compound and/or the fluorine-containing surfactant.
Item 16. The blowing agent according to item 11 further comprising:
   (i) at least one halogen-containing compound with a boiling point of at least 15°C selected from the group consisting of halogenated hydrocarbons, halogenated alcohols and halogenated ethers; and
   (ii) a glycol compound and/or a fluorine-containing surfactant.
Item 17. The blowing agent according to item 16, wherein when a premix containing a polyol and the blowing agent is prepared, the vapor pressure at 40°C of the premix is 95% or less relative to the vapor pressure at 40°C of a premix which has the same component weight ratio as the aforementioned premix except for containing neither (i) the halogen-containing compound with a boiling point of at least 15°C nor (ii) the glycol compound and/or the fluorine-containing surfactant.
Item 18. A premix comprising a blowing agent and a polyol, wherein the blowing agent comprises a mixture of 1,1,1,3,3-pentafluoropropane and 1,1,1,3,3-pentafluorobutane, the weight ratio of 1,1,1,3,3-pentafluoropropane/1,1,1,3,3-pentafluorobutane in the vapor phase of the premix being at least 1.5 at 25°C.
Item 19. The premix according to item 18, wherein the blowing agent is the mixture further comprising at least one halogen-containing compound with a boiling point of at least 15°C selected from the group consisting of halogenated hydrocarbons, halogenated alcohols and halogenated ethers.
Item 20. The premix according to item 19, wherein the vapor pressure at 40°C of the premix is 95% or less relative to the vapor pressure at 40°C of a premix which has the same weight ratio of the blowing agent and the same weight ratio of HFC-245fa to HFC-365mfc as the aforementioned premix except for not containing the halogen-containing compound with a boiling point of at least 15°C.
Item 21. The premix according to claim 33, wherein the mixture further comprises a glycol compound and/or a fluorine-containing surfactant, and is used as the blowing agent.
Item 22. The premix according to Claim 21, wherein the vapor pressure at 40°C of the premix is 95% or less relative to the vapor pressure at 40°C of a premix which has the same component weight ratio as the aforementioned premix except for not containing the glycol compound and/or the fluorine-containing surfactant.
Item 23. The blowing agent according to Claim 18, wherein the mixture further comprises:
   (i) at least one halogen-containing compound with a boiling point of at least 15°C selected from the group consisting of halogenated hydrocarbons, halogenated alcohols and halogenated ethers; and
   (ii) a glycol compound and/or a fluorine-containing surfactant, and is used as the blowing agent. Item 24. The premix according to item 18, wherein the vapor pressure at 40°C of the premix is 95% or less relative to the vapor pressure at 40°C of a premix which has the same component weight ratio as the aforementioned premix except for containing neither (i) the halogen-containing compound with a boiling point of at least 15°C nor (ii) the glycol compound and/or the fluorine-containing surfactant.

Blowing agents usable in the present invention may be mixtures of 1,1,1,3,3-pentafluoropropane (HFC-245fa) and 1,1,1,3,3-pentafluorobutane (HFC-365mfc). Furthermore, mixtures comprising HFC-245fa and HFC-365mfc, and mixtures comprising HFC-245fa, HFC365mfc and other halogen-containing compounds can also be used herein as blowing agents. Blowing agents usable in the present invention can further contain glycol compounds and/or fluorine-containing compounds in addition to the aforementioned blowing agent ingredients. Each blowing agent such as above is sometimes referred to as the "blowing agent of the present invention."

The present invention includes a premixe containing a polyol and the blowing agent of the present invention. Moreover, the invention includes a process for producing a synthetic resin foam using the blowing agent or premixe of the present invention.

1,1,1,3,3-Pentafluorobutane is a hydrofluorocarbon (HFC) having a boiling point of 40°C which does not deplete the ozone layer. HFC-365mfc has excellent properties as a blowing agent.

However, HFC-365mfc is flammable (flash point: -18 to -25°C, flammability range: 3.8-13.3 vol.%), although its flammability is lower than that of hydrocarbon blowing agents such as pentanes. In contrast, the drawbacks of HFC-245fa are, as described above, caused by its low boiling point and low solubility in polyols.

The inventors developed a mixed blowing agent containing HFC-365mfc and HFC-245fa in a specific proportion to overcome the drawbacks of HFC-245fa while maintaining its properties as a blowing agent. In particular, by mixing HFC-245fa, with a boiling point of 15°C, and HFC-365mfc, with a boiling point of 40°C, in a specific proportion, the mixture can acquire a boiling point of more than 15°C and the drawbacks of HFC-245fa can be overcome. Moreover, the drawback of HFC-365mfc, i.e., flammability, is also overcome by the addition of the nonflammable HFC-245fa. Furthermore, the respective HFCs have nearly identical excellent thermal insulation properties; therefore, the use of these HFCs in combination can advantageously maintain the level of thermal insulation nearly identical to that provided by a single HFC. Hence, the blowing agents of the invention can be preferably used for foams such as urethane resin foams in which thermal insulation is strongly required.

The inventors conducted extensive research on the relationship between the mixing ratio and flammability of gaseous HFC-245fa and gaseous HFC-365mfc. Flammability was examined according to the Ashrae Standard (10-liter round-bottom flask, discharge ignition, 25°C). Details are described in Ashrae Standard 34-2001 as well as in ASTM Designation E681-94. A mixture of 55 wt.% gaseous HFC-245fa and 45 wt.% gaseous HFC-365mfc exhibited flammability while a mixture of 65 wt.% gaseous HFC-245fa and 35 wt.% gaseous HFC-365mfc exhibited nonflammability.

In a practical foam production process, nonflammability is required of a mixture containing a blowing agent and a polyol, i.e., a premix. The premix usually contains, in addition to the blowing agent and the polyol, a foam-producing catalyst, foam conditioning agent, decomposition inhibitor (stabilizer), etc.

The weight ratio of HFC-245fa to HFC-365mfc in the vapor phase of the blowing agent does not correspond to the weight ratio of HFC-245fa to HFC-365mfc in the vapor phase of the premix. Since the blowing agent blends with a polyol, a foam-producing catalyst, a foam conditioning agent, a decomposition inhibitor (stabilizer), etc., contained in the premix, the weight ratio of HFC-245fa to HFC-365mfc in the vapor phase of the premix is different from that of the blowing agent. Hereinbelow, the premix containing a polyol, a foam-producing catalyst, a foam conditioning agent, a decomposition inhibitor (stabilizer) or the like, but not containing blowing agents are sometimes called a "system solution".

For example, a blowing agent having a composition of 40 wt.% HFC-245fa and 60 wt.% HFC-365mfc in the liquid phase has a composition of 62 wt.% HFC-245fa and 38 wt.% HFC-365mfc in the vapor phase at 25°C, and is nonflammable. However, a premix prepared by mixing a polyester polyol having a hydroxyl value of 300 mg KOH/g with a blowing agent having a composition of 40 wt.% HFC-245fa and 60 wt.% HFC-365mfc in the liquid phase (weight ratio of blowing agent to polyol: 40 to 100) has a composition of 54 wt.% of HFC-245fa and 46 wt.% of HFC-365mfc in the vapor phase at 25°C, and is flammable. Hence, when a blowing agent is nonflammable in the vapor phase, a premix containing it is not necessarily nonflammable in the vapor phase. As discussed above, this phenomenon is attributable to the compatibility of the blowing agent in a polyol. Therefore, the flammability may be influenced by a catalyst, a foam conditioning agent, a stabilizer (decomposition inhibitor), etc., contained in a premix.

In the present Description, the composition in the vapor phase of the premix is a value measured by gas chromatography after mixing each ingredient by stirring.

For example, to obtain a premix that is nonflammable at 25°C, HFC-245fa and HC-365mfc are used in an amount such that the vapor phase of the premix at 25°C has a HFC-245fa/HFC-365mfc weight ratio of at least about 1.5, and preferably at least about 1.86. This approach differs greatly from approaches focusing on whether a blowing agent composed of HFC-245fa and HFC-365mfc should be nonflammable or flammable in the vapor phase. The inventors, as a result of their extensive research, found that the objectives described above can be attained by making the vapor phase composition of the premix nonflammable, and accomplished the present invention.

With respect to the blowing agent of the invention, when a premix containing the blowing agent, a polyol, etc., is prepared, the weight ratio of FHC-245fa/HFC-365mfc in the vapor phase of the premix at 25°C is preferably about 1.5 or greater, more preferably about 1.7 or greater, and most preferably about 1.7-4. Moreover, when a premix containing the blowing agent, a polyol, etc., is prepared, the weight ratio of HFC-245fa/HFC-365mfc in the vapor phase of the premix at 40°C is preferably about 1.85 or greater, more preferably about 1.9 or greater, and most preferably about 1.9-4.

The boiling point of the mixture of HFC-245fa and HFC-365mfc (the temperature at which its vapor pressure becomes about 0.1 MPa) is higher than that of HFC-245fa alone. The boiling point of the blowing agent composed of HFC-245fa and HFC-365mfc is preferably about 17-27°C, more preferably about 18-27°C, and most preferably about 20-27°C. HFC-245fa and HFC-365mfc are mixed in a ratio such that the boiling point is within this range. When a premix is prepared, the boiling point of the premix should also be within this range. In particular, the preferable temperature at which the vapor pressure of the premix becomes 0.101 MPa is about 17-27°C, more preferably about 18-27°C, and most preferably about 20-27°C. The ratio of HFC-245fa to HFC-365mfc so that the boiling point of the premix becomes about 17°C is about 90-80 wt.% HFC-245fa to about 10-20 wt.% HFC-365mfc, counting the total of HFC-245fa and HFC-365mfc as 100 wt.%. The ratio of HFC-245fa to HFC-365mfc so that the boiling point of the premix becomes about 27°C is about 60-50 wt.% HFC-245fa to about 40-50 wt.% HFC-365mfc, provided that the total of HFC-245fa and HFC-365mfc is 100 wt.%.

In the premix, the ratio of HFC-365mfc so that the flammability of HFC-365mfc can be negated is less than 49-55 wt.%, preferably 43-49 wt.% or less, and more preferably 43 wt.% or less.

Therefore, the preferable ratio of HFC-245fa to HFC-365mfc to be mixed is about 90-51 wt.% HFC-245fa to about 10-49 wt.% HFC-365mfc, more preferably about 90-54 wt.% HFC-245fa to about 10-46 wt.% HFC-365mfc, and particularly preferably about 80-60 wt.% HFC-245fa to about 20-40 wt.% HFC-365mfc, provided that the total of HFC-245fa and HFC-365mfc is 100 wt.%.

### Halogen-Containing Compounds

The blowing agent of the present invention may further contain at least one halogen-containing compound with a boiling point of at least 15°C selected from the group consisting of halogenated hydrocarbons, halogenated alcohols and halogenated ethers. In other words, the blowing agent of the present invention contains 1,1,1,3,3-pentafluoropropane and 1,1,1,3,3-pentafluorobutane and optionally at least one halogen-containing compound with a boiling point of at least 15°C selected from the group consisting of halogenated hydrocarbons, halogenated alcohols and halogenated ethers. By adding such a halogen-containing compound with a boiling point of at least 15°C, the vapor pressure of the premix can be reduced and in some cases the flammability of the premix can be further suppressed.

When a premix is prepared which contains a polyol, a blowing agent containing the halogen-containing compound, etc., the weight ratio of FHC-245fa/HFC-365mfc in the vapor phase of the premix is preferably about 1:1 to 6:1 at 25°C.

Halogen-containing compounds usable herein are compounds containing at least one halogen atom such as F, Cl, Br, I, etc. It is preferable that the halogen-containing compounds usable herein have substantially no potential of ozone layer depletion. Examples of such halogen-containing compounds are those containing fluorine and/or iodine as halogen atom(s). In view of absolutely no risk of ozone layer depletion, those containing only fluorine as halogen atoms are preferable. Compounds having relatively high boiling points are not readily evaporated, and thus the potential of depleting the ozone layer is reduced even if bromine or chlorine is contained. Those chlorofluorocarbons (CFCs) that are actually regulated to avoid ozone layer depletion have 3 carbon atoms or fewer. Therefore, halogen-containing compounds usable in the present invention include chlorofluoroalkanes having 4 or more carbon atoms.

The boiling point of the halogen-containing compounds usable herein is usually 15°C or greater at 1 atmospheric pressure (about 0.1 MPa), preferably about 25°C or greater, and more preferably about 35-140°C.

The ratio of HFC-245fa, HFC-365fmc and the halogen-containing compound in the blowing agent can be suitably selected according to the intended use, the composition of the ingredients for a synthetic resin foam, etc. For example, it is usually preferable to arrange the ratio of HFC-245fa, HFC-365mfc and the halogen-containing compound such that the vapor pressure at about 40°C of a premix containing HFC-245fa, HFC-365mfc, the halogen-containing compound, a polyol, etc., is about 95% or less, preferably about 70-90 %, and more preferably about 70-85 %, relative to the vapor pressure at 40°C of a premix which has the same component weight ratio as the aforementioned premix except for not containing the halogen-containing compound. More specifically, it is preferable to arrange the ratio of HFC-245fa, HFC-365mfc and the halogen-containing compound such that when a premix containing (a) the halogen-containing compound: A parts by weight, (b) HFC-245fa and HFC-365mfc: B parts by weight in total, and (c) a polyol: C parts by weight is prepared, the vapor pressure at about 40°C of the premix containing ingredients (a)-(c) above is about 95% or less, preferably about 90% or less, and more preferably about 85% or less, relative to the vapor pressure at 40°C of a premix containing (b) HFC-245fa and HFC-365mfc: B parts by weight in total and (c) a polyol: C parts by weight. To measure the difference in vapor pressures, a premix containing HFC-245fa, HFC-365mfc and the halogen-containing compound in a total of about 20-70 parts by weight based on 100 parts by weight of polyol is used.

### (a) Halogenated Hydrocarbons

Examples of halogenated hydrocarbons usable herein include linear, branched and cyclic halogenated hydrocarbons. Preferable are linear and branched halogenated aliphatic hydrocarbons and halogenated alicyclic hydrocarbons. Halogenated hydrocarbons may be either perhalogenated hydrocarbons wherein all hydrogen atoms are substituted with halogen atoms, or hydrogencontaining halogenated hydrocarbons. Furthermore, such halogenated hydrocarbons may be saturated or unsaturated.

The boiling points of the halogenated hydrocarbons usable herein are usually about 15°C or greater, preferably about 30-140°C, and more preferably about 40-120°C, at 1 atmospheric pressure (about 0.1 MPa). Although the number of carbon atoms in each halogenated hydrocarbon is not limited insofar as the boiling point thereof is 15°C or greater, it is usually 4 or more, preferably about 4-9, and more preferably about 4-6.

Specific examples of halogenated aliphatic hydrocarbons are 3,3,4,4,5,5,6,6,6-nonafluoro-1-hexene (CH₂=CH(CF₂)₃CF₃, boiling point: 58°C), 2,3,3,4,4,5,5-heptafluoro-1-pentene (CH₂=CFCF₂CF₂CF₂H) and like hydrofluoroalkenes; perfluoro-1-butene (CF₂=CFCF₂CF₃), perfluorohexenes (C₆F₁₂, boiling points: 46, 49 or 51°C), perfluorononenes (C₉F₁₈) and like perfluoroalkenes; perfluorohexane (C₆F₁₄, boiling point: 58°C) and like perfluoroalkanes; perfluorocyclobutane (*c*-C₄F₈) and like perfluorocyaloalkanes; 1,1,2,2,3,3,4,4-octafluorobutane (CF₂HCF₂CF₂CF₂H, boiling point: 44° C), 1,1,1,2,2,3,4,5,5,5-decafluoropentane (CF₃CF₂CFHCFHCF₃, boiling point: 54°C), 2-trifluoromethyl-1,1,1,2,3,4,5,5,5-nonafluoropentane (C₆F₁₂H₂, boiling point: 53°C), 2-trifluoromethyl-1,1,1,3,3,4,4,5,5,5-decafluoropentane (C₆F₁₃H, boiling point: 62°C), 1,1,2,2,3,3,4,4,5,5,6,6,6-tridecafluoropentane (H(CF₂)₆F, boiling point: 72° C) and like hydrofluoroalkanes; 1,2,3,3,4,4-hexafluorocyclobutane (*c*-C₄F₆H₂, boiling point: 63°C), 2,3,3,4,4,5,5-pentafluorocyclopentane (*c*-C₅F₇H₃, boiling point: 83°C) and like hydrofluorocycloalkanes; 1,1,2,3,4,4-hexafluoro-1,2,3,4-tetrachlorobutane (CF₂ClCFClCFClCF₂Cl, boiling point: 134°C), 2,3-dichlorooctafluorobutane (CF₃CFClCFClCF₃, boiling point: 63°C), 1,4-dichlorooctafluorobutane (CF₂ClCF₂CF₂CF₂Cl, boiling point: 66°C) and like chlorofluoroalkanes; 1-chloro-1,1,2,2,3,3,4,4-octafluorobutane (CF₂ClCF₂CF₂CF₂H, boiling point: 50°C), 1-chloro-1,1,2,2,3,3,4,4,5,5,6,6-dodecafluorohexane (CF₂ClCF₂CF₂CF₂CF₂CF₂H, boiling point: 78°C) and like hydrochlorofluoroalkanes; 1,2-dichlorohexafluorocyclobutane (CFClCFClCF₂CF₂, boiling point: 60°C) and like chlorofluorocycloalkanes; iodotrifluoromethane (CF₃I), 1-iodononafluorobutane (CF₂ICF₂CF₂CF₃, boiling point: 67° C) and like iodofluoroalkanes; 1-bromopropane (CH₂BrCH₂CH₃, boiling point: 71°C), 2-bromobutane (CH₃CHBrCH₂CH₃, boiling point: 91°C) and like hydrobromoalkanes; etc.

Among these, preferable are 3,3,4,4,5,5,6,6,6-nonafluoro-1-hexene, 1,1,2,2,3,3,4,4-octafluorobutane, 1,1,2,3,4,4-hexafluoro-1,2,3,4-tetrachlorobutane, 2,3-dichlorooctafluorobutane, 1,4-dichlorooctafluorobutane, 1-chloro-1,1,2,2,3,3,4,4-octafluorobutane, 1-chloro-1,1,2,2,3,3,4,4,5,5,6,6-dodecafluorohexane, 1,2-dichlorohexafluorocyclobutane, 2-bromobutane, etc.

### (b) Halogenated Alcohols

Halogenated alcohols include linear and branched halogenated aliphatic alcohols. Halogenated alcohols may be either perhalogenated alcohols wherein all hydrogen atoms are substituted with halogen atoms, or hydrogencontaining halogenated alcohols.

Although the number of carbon atoms in the halogenated alcohols are not limited insofar as the boiling point thereof is 15°C or greater, it is usually 2 or more, preferably about 2-5, and more preferably about 2-4.

The boiling point of halogenated alcohols usable herein is usually about 15°C or greater, preferably about 40-130°C, and more preferably about 50-120°C, at 1 atmospheric pressure (about 0.1 MPa).

Specific examples of halogenated alcohols are 1,1,1-trifluoroethanol (CF₃CH₂OH, boiling point: 74°C), 1,1,1,2,2-pentafluoropropanol (CF₃CF₂CH₂OH, boiling point: 82° C), 2,2,3,3-tetrafluoropropanol (CF₂HCF₂CH₂OH, boiling point: 110°C), 1,1,1,2,2-pentafluorobutanol (CF₃CF₂CH₂CH₂OH, boiling point: 100°C), 1,1,1,2,3,3-hexafluorobutanol (CF₃CFHCF₂CH₂OH, boiling point: 114°C), 1,1,1,3,3,3-hexafluoro-2-ol (CF₃CH(OH)CF₃, boiling point: 59°C) and like hydrofluoroalcohols, etc.

Among these, preferable are 2,2,3,3-tetrafluoropropanol, 1,1,1,2,2-pentafluorobutanol, 1,1,1,3,3,3-hexafluoro-2-ol, etc.

### (c) Halogenated Ethers

The boiling point of halogenated ethers usable herein is usually about 15°C or greater, preferably about 25-110°C, and more preferably about 30-95°C, at 1 atmospheric pressure (about 0.1 MPa). Among halogenated ethers, preferable are hydrofluoroethers (HFEs).

HFEs usable in the present invention are not limited insofar as the boiling point thereof is 15°C or greater. The number of carbon atoms in such HFEs is usually about 3 or more, preferably about 3-7, and more preferably about 3-6.

Specific examples of HFE having a boiling point of 15°C or greater are 1,1,2,2-tetrafluoroethyl difluoromethyl ether (CF₂HCF₂OCHF₂, boiling point: 29° C), 1,1,2,2-tetrafluoroethyl methyl ether (CF₂HCF₂OCH₃, boiling point: 37°C), 2,2,2-trifluoroethyl 1,1,2,2-tetrafluoroethyl ether (CF₃CH₂OCF₂CF₂H, boiling point: 56°C), 1,1,2,3,3,3-hexafluoropropyl methyl ether (CF₃CFHCF₂OCH₃, boiling point: 54°C), 2,2,3,3-tetrafluoropropyl 1,1,2,2-tetrafluoroethyl ether (CF₂HCF₂CH₂OCF₂CF₂H, boiling point: 92°C), 1,1,2,2-tetrafluoroethyl 2,2,3,3,3-pentafluoropropyl ether (CF₂HCF₂OCH₂CF₂CF₃, boiling point: 70°C), 1,1,2,3,3,3-hexafluoropropyl 2,2,3,3,3-pentafluoropropyl ether (CF₃CFHCF₂OCH₂CF₂CF₃, boiling point: 86°C), nonafluorobutyl methyl ether (C₄F₉OCH₃, boiling point: 60°C), nonafluorobutylethyl ether (C₄F₉OC₂H₅, boiling point: 78°C), 1-trifluoromethyl-1,2,2,2-tetrafluoroethyl methyl ether ((CF₃)₂CFOCH₃, boiling point: 29°C), perfluoropropyl methyl ether (CF₃CF₂CF₂OCH₃, boiling point: 34°C), 2,2,3,3,3-pentafluoropropyl difluoromethyl ether (CF₃CF₂CH₂OCHF₂, boiling point: 46°C), 1,1,2,3,3,3-hexafluoropropyl 2,2,2-trifluoroethyl ether (CF₃CFHCF₂OCH₂CF₃, boiling point: 72°C), 2,2,3,4,4,4-hexafluorobutyl difluoromethyl ether (CF₃CFHCF₂CH₂OCHF₂, boiling point: 88°C), 1,1,2,3,3,3-hexafluoropropyl 1,1,2,2-tetrafluoropropyl ether (CF₃CFHCF₂OCH₂CF₂CF₂H, boiling point: 102°C), 1,1,2,3,3-pentafluoro-2-trifluoromethyl methyl ether (CF₃CH(CF₃)CF₂OCH₃, boiling point: 71°C), etc. Among these, preferable are 1,1,2,2-tetrafluoroethyl difluoromethyl ether, 1,1,2,2-tetrafluoroethyl methyl ether, 2,2,2-trifluoroethyl 1,1,2,2-tetrafluoroethyl ether, 1,1,2,3,3,3-hexafluoropropyl methyl ether, 2,2,3,3-tetrafluoropropyl 1,1,2,2-tetrafluoroethyl ether, nonafluorobutyl methyl ether, nonafluorobutyl ethyl ether, 1,1,2,3,3,3-hexafluoropropyl 2,2,2-trifluoroethyl ether, etc.

Halogenated ethers other than HFEs are, for example, perfluoropropylepoxide (CF₃CF(O)CF₂) and like perfluoroalkylepoxides; 1,2,2-trifluoroethylene trifluoromethyl ether (CF₂=CFOCF₃), 1,2,2-trifluoroethylene 1,1,2,2,3,3,3-heptafluoropropyl ether (CF₂=CFOCF₂CF₂CF₃) and like unsaturated fluoro ethers; etc.

The halogen-containing compounds usable in the present invention are preferably flame retardant although they themselves do not have to be flame retardant; it is sufficient that the blowing agents containing them are flame retardant. In particular, preferable are premixes that become flame retardant when halogen-containing compounds are included in premixes. Examples of such halogen-containing compounds are 1,1,1-trifluoroethanol, 2,2,3,3-tetrafluoropropanol, 1,1,2,2-tetrafluoroethyl methyl ether, 1,1,2,3,3,3-hexafluoropropyl methyl ether, etc.

The halogen-containing compounds usable in the present invention are preferably highly compatible with in HFC-245fa and HFC-365mfc. Furthermore, the halogen-containing compounds are preferably highly compatible the ingredients of synthetic resins, especially polyols. For example, preferable halogen-containing compounds are those that do not exhibit phase separation after the halogen-containing compound and a polyol are shaken together for about 10 minutes and left to stand at about 0-25°C for about 5 hours. The use of halogen-containing compounds that are highly compatible with polyols as well as HFC-245fa and HFC-365mfc can reduce the loss of blowing agents when mixtures of polyols and blowing agents are placed in an open system.

As the halogen-containing compounds usable herein, those that can be used alone as blowing agents are also preferable. In particular, preferable are those that have a low thermal conductivity and a boiling point of about 15-90°C. The preferable thermal conductivity of the halogen-containing compounds, when they are in the gaseous state, is about 8-20 mW/mK at about 1 atmospheric pressure (about 0.1 MPa). Examples of such halogen-containing compounds are 1,1,2,2,3,3,4,4-octafluorobutane, 1,1,2,2-tetrafluoroethyl difluoromethyl ether, 1,1,2,2-tetrafluoroethyl methyl ether, 2,2,2-trifluoroethyl-1,1,2,2-tetrafluoroethyl ether, 1,1,2,3,3,3-hexafluoropropyl methyl ether, nonafluorobutyl methyl ether, etc. When a halogen-containing compound can itself function as a blowing agent, the amount of blowing agent containing the halogen-containing compound may be about the same as that of a blowing agent consisting of HFC-245fa and HFC-365mfc. In other words, the proportion of HFC-245fa and HFC-365mfc in the blowing agent can be reduced, thereby profoundly reducing the total of the partial pressures of HFC-245fa and HFC-365mfc in the vapor pressure of the premix containing a polyol and the blowing agent of the invention. Moreover, when a foam is actually prepared, the halogen-containing compound by itself can function as a blowing agent, thereby avoiding concerns about the halogen-containing compound remaining in the foam as a condensate.

The ratio of halogen-containing compound to be mixed with HFC-245fa and HFC-365mfc can be suitably selected according to the type of halogen-containing compound, application of the foam, and formulation of the ingredients. The preferable ratio is such that the boiling point of the blowing agent, i.e., the temperature at which its vapor pressure becomes 1 atmospheric pressure (about 0.1 MPa), is preferably about 17-35°C and particularly preferably about 18-30°C.

The preferable boiling point of a premix containing a polyol, HFC-245fa, HFC-365mfc, the halogen-containing compound, etc., is about 17-32°C.

The vapor pressure of a mixture (premix) of a polyol and a blowing agent containing the halogen-containing compound is not limited. It is, however, usually about 17-32°C, preferably about 18-28°C and more preferably about 20-28°C.

The ratio of halogen-containing compound to be mixed with HFC-245fa and HFC-365mfc is not limited and can be suitably selected according to the type of halogen-containing compound and other factors. The halogen-containing compound is usually used in an amount of about less than 50 mol, preferably less than 40 mol, more preferably less than 30 mol, and particularly preferably about 3-25 mol, provided that the total of the above 3 ingredients is 100 mol. If the vapor pressure and flammability of the premix containing the blowing agent of the present invention are acceptable, the blowing agent may be a mixture not containing such halogen-containing compounds.

Although the ratio of HFC-245fa to HFC-365mfc is not limited when the halogen-containing compound is used, it is usually 95-52 wt.% HFC-245fa to 5-48 wt.% HFC-365mfc, and particularly preferably 90-50 wt.% HFC-245fa to 10-50 wt.% HFC-365mfc, counting the total of HFC-245fa and HFC-365mfc as 100 wt.%.

### Compatibilizers

The blowing agent of the present invention may further contain a glycol compound and/or a fluorine-containing surfactant. In other words, the blowing agent of the present invention can be a mixture containing 1,1,1,3,3-pentafluoropropane, 1,1,1,3,3-pentafluorobutane, and a glycol compound and/or a fluorine-containing surfactant, or a mixture containing 1,1,1,3,3-pentafluoropropane, 1,1,1,3,3-pentafluorobutane, the halogen-containing compound with a boiling point of at least 15°C, and a glycol compound and/or a fluorine-containing surfactant.

HFC-245fa and HFC-365mfc exhibit a solubility in polyols relatively lower than that of HCFC-141b. Since glycol compounds and fluorine-containing surfactants can function as compatibilizers, the compatibility of the blowing agent in polyols can be improved by them. The improved compatibility can reduce the loss of the blowing agent from the premix which occurs due to evaporation and can decrease the vapor pressure of the premix. In particular, when a large proportion of HFC-245fa is contained in a premix, the vapor pressure of the premix is likely to be increased; therefore, it is preferable to use glycol compounds and/or fluorine-containing surfactants to reduce the vapor pressure of the premix. Specifically, when the proportion of HFC-245fa is increased to suppress flammability, the vapor pressures of the blowing agent and the premix tend to be increased accordingly. In this case, by adding glycol compounds and/or fluorine-containing surfactants, the vapor pressure can be reduced without substantially changing the flammability.

### Glycol Compounds

Examples of glycol compounds usable herein are ethylene glycol compounds, propylene glycol compounds, etc.

Examples of ethylene glycol compounds include those of the following formulae (A), (B) and (C):

CₐH₂ₐ₊₁(OCH₂CH₂O)_{b}C_{c}H_{2c+1} (A)

wherein a represents 0, 1, 2, 3 or 4; b represents 1, 2, 3 or 4; and c represents 0, 1, 2, 3 or 4;

C_{d}H_{2d+1}CO(OCH₂CH₂O)ₑCOC_{f}H_{2f+1} (B)

wherein d represents 0, 1, 2, 3 or 4; e represents 1, 2, 3 or 4; and f represents 0, 1, 2, 3 or 4; and

CᵢH₂ᵢ₊₁CO(OCH₂CH₂O)ⱼCₖH₂ₖ₊₁ (C)

wherein i represents 0, 1, 2, 3 or 4; j represents 1, 2, 3 or 4; and k represents 0, 1, 2, 3 or 4.

Specific examples of ethylene glycol compounds of formula (A) are ethylene glycol, ethylene glycol methyl ether, ethylene glycol dimethyl ether, ethylene glycol ethyl ether, ethylene glycol diethyl ether, ethylene glycol propyl ether, ethylene glycol dipropyl ether, ethylene glycol butyl ether, ethylene glycol dibutyl ether, diethylene glycol methyl ether, diethylene glycol dimethyl ether, diethylene glycol ethyl ether, diethylene glycol diethyl ether, diethylene glycol propyl ether, diethylene glycol dipropyl ether, diethylene glycol butyl ether, diethylene glycol dibutyl ether, triethylene glycol methyl ether, triethylene glycol dimethyl ether, triethylene glycol ethyl ether, triethylene glycol diethyl ether, triethylene glycol propyl ether, triethylene glycol dipropyl ether, triethylene glycol butyl ether, triethylene glycol dibutyl ether, tetraethylene glycol, etc.

Specific examples of ethylene glycol compounds of formula (B) are ethylene glycol monoformate, ethylene glycol diformate, diethylene glycol monoformate, diethylene glycol diformate, triethylene glycol monoformate, triethylene glycol diformate, ethylene glycol monoacetate, ethylene glycol diacetate, diethylene glycol monoacetate, diethylene glycol diacetate, triethylene glycol monoacetate, triethylene glycol diacetate, ethylene glycol monopropionate, ethylene glycol dipropionate, diethylene glycol monopropionate, diethylene glycol dipropionate, triethylene glycol monopropionate, triethylene glycol dipropionate, etc.

Specific examples of ethylene glycol compounds of formula (C) are ethylene glycol methyl ether formate, ethylene glycol ethyl ether formate, ethylene glycol propyl ether formate, ethylene glycol methyl ether acetate, ethylene glycol ethyl ether acetate, ethylene glycol propyl ether acetate, ethylene glycol methyl ether propionate, ethylene glycol ethyl ether propionate, ethylene glycol propyl ether propionate, diethylene glycol methyl ether acetate, diethylene glycol methyl ether formate, diethylene glycol ethyl ether formate, diethylene glycol propyl ether formate, diethylene glycol ethyl ether acetate, diethylene glycol propyl ether acetate, diethylene glycol methyl ether propionate, diethylene glycol ethyl ether propionate, diethylene glycol propyl ether propionate, triethylene glycol methyl ether formate, triethylene glycol ethyl ether formate, triethylene glycol propyl ether formate, triethylene glycol methyl ether acetate, triethylene glycol ethyl ether acetate, triethylene glycol propyl ether acetate, triethylene glycol methyl ether propionate, triethylene glycol ethyl ether propionate, triethylene glycol propyl ether propionate, etc.

Preferable ethylene glycol compounds include diether compounds of formula (A) where a and c are 1 or more, diester compounds of formula (B) where d and f are 1 or more, and ether ester compounds of formula (C) where i and k are 1 or more, etc. More preferable are ethylene glycol diacetate, ethylene glycol dimethyl ether, ethylene glycol monomethyl ether acetate, ethylene glycol mono-n-butyl ether acetate, ethylene glycol ethyl ether acetate, diethylene glycol ethyl ether acetate, diethylene glycol butyl ether acetate, diethylene glycol dimethyl ether, diethylene glycol diethyl ether, diethylene glycol dibutyl ether, diethylene glycol dibutyl ether, diethylene glycol di-n-butyl ether, triethylene glycol dimethyl ether, tetraethylene glycol dimethyl ether, etc. Ethylene glycol monomethyl ether, ethylene glycol monoethyl ether, ethylene glycol mono-n-butyl ether, ethylene glycol monoisopropyl ether, ethylene glycol monopropyl ether, ethylene glycol-n-hexyl ether, diethylene glycol monoethyl ether, diethylene glycol monomethyl ether, diethylene glycol monoisopropyl ether, diethylene glycol monopropyl ether, diethylene glycol-t-butyl ether, diethylene glycol-n-hexyl ether, diethylene glycol monobutyl ether, triethylene glycol monoethyl ether, and triethylene glycol monomethyl ether can be also preferably used.

Examples of propylene glycol compounds are propylene glycol, dipropylene glycol, tripropylene glycol, propylene glycol monomethyl ether, propylene glycol monobutyl ether, 3-methoxy-1-butanol, 3-methoxy-3-methylbutanol, dipropylene glycol monoethyl ether, dipropylene glycol monomethyl ether, dipropylene glycol monobutyl ether, tripropylene glycol monomethyl ether, tripropylene glycol monobutyl ether, 2-methoxy-1-propanol, tripropylene glycol dimethyl ether, propylene glycol monomethyl ether acetate, 3-methoxy-3-methylbutyl acetate, 3-methoxybutyl acetate, tripropylene glycol monoethyl ether and like compounds. Especially preferable are tripropylene glycol dimethyl ether, propylene glycol monomethyl ether acetate, 3-methoxy-3-methylbutyl acetate and 3-methoxybutyl acetate.

Preferable glycol compounds are those that are highly compatible with HFC-245fa and HFC-365mfc, and/or polyols. For example, preferable glycol compounds do not exhibit phase separation after a premix containing HFC-245fa, HFC-365mfc, the glycol compound, a polyol, etc., is shaken for about 10 minutes and left to stand at about 0-25°C for about 5 hours. In terms of compatibility with HFC-245fa and HFC-365mfc, and/or polyols, the compounds specified above are preferably used. The higher the compatibility of glycol compounds with HFC-245fa and HFC-365mfc, and/or polyols, the less the loss (amount evaporated) of blowing agent, when a premix containing a polyol, a blowing agent, etc., is placed in an open system. The vapor pressure of the premix can also be reduced.

The glycol compounds are preferably flame retardant. Although they themselves do not have to be absolutely nonflammable, it is sufficient that mixtures of glycol compounds with HFC-245fa and HFC-365fmc are flame retardant. It is preferable that the glycol compounds have a flame retardancy corresponding to or better than that of dangerous goods, class 4, petroleum 3. However, the flame retardancy of the glycol compounds is not limited insofar as the premix containing the glycol compound exhibits a flame retardancy approximately the same as or better than that of dangerous goods, class 4, petroleum 3. The flame retardancy of dangerous goods, class 4, petroleum 3 corresponds to an ignition point of about 100°C or greater and a flash point of about 70°C or greater with respect to compounds that are liquid at 1 atmospheric pressure and 20°C. The use of flame retardant glycol compounds can ensure the blowing agent is flame retardant so that the flame retardancy required upon foaming at work sites can be attained. For example, the flash point of diethylene glycol monoethyl ether acetate is 110°C and the flash point of ethylene glycol diacetate is 96°C, and both glycol compounds are liquid at a temperature of 20°C. Thus, they have a flame retardancy higher than that of dangerous goods, class 4, petroleum 3.

Although the boiling point of glycol compounds usable in the present invention is not limited, it is usually about 85-300°C and preferably about 120-250°C.

### Fluorine-Containing Surfactants

Examples of fluorine-containing surfactants usable herein include those of the following formulae (D), (E) and (F):

HO[CH₂C(R)(CH₂OCH₂R^{fa})CH₂O]ₙH (D)

wherein n is from 3 to 30; R^{fa} is -(CF₂)_{a'}H with a' being from 1 to 8, or -(CF₂)_{b'}F with b' being from 1 to 8; and R is hydrogen or a lower alkyl group;

HO[CH(CH₂R^{fb})CH₂O]ₘH (E)

wherein m is from 3 to 30; and R^{fb} is -(CF₂)_{c'}H with c' being from 1 to 8, or -(CF₂)_{d'}F with d' being from 1 to 8; and

R¹O[CH(R⁰)(CH₂)₁ₐO]_{1b}R² (F)

wherein R⁰ is hydrogen or CH₃; R¹ is a fluorine-containing alkyl group or a substitution product thereof; R² is hydrogen or a lower alkyl group; 1a is from 1 to 3; and lb is a integer from 4 to 15.

In formula (D), n is usually from about 3 to 30, preferably about 3 to 10. R^{fa} is -(CF₂)_{a'}H with a' being from 1 to 8, or -(CF₂)_{b'}F with b' being from 1 to 8; a' is preferably from 1 to 4, and b' is preferably from 1 to 4. R is hydrogen or a lower alkyl group. The number of carbon atoms in the lower alkyl group represented by R is usually about 1-4, preferably about 1 or 2.

Preferable examples of compounds of formula (D) include HO[CH₂C(CH₃)(CH₂OCH₂CF₃)CH₂O]₇H, HO[CH₂C(CH₃)(CH₂OCH₂C₄F₈H)CH₂O]₆H, etc.

In formula (E), m is usually from about 3 to 30, preferably about 3 to 10. R^{fb} is -(CF₂)_{c'}H with c' being from 1 to 8, or -(CF₂)_{d'}F with d' being from 1 to 8; c' is preferably from 1 to 4, and d' is preferably from 1 to 4.

Preferable examples of compounds of formula (E) include HO[CH(CH₂C₄F₉)CH₂O]₆H, HO[CH(CH₂C₂F₅)CH₂O]₆H, etc.

In formula (F), n is usually from about 1 to 3, preferably about 1 or 2, and m is usually from about 4 to 15, preferably about 4 to 10. R¹ is a fluorine-containing alkyl group or a substituted group thereof. The number of carbon atoms in the fluorine-containing alkyl group represented by R¹ is usually about 10-20, preferably about 12-18. The number of fluorine atoms in the fluorine-containing alkyl group represented by R¹ is usually about 10-40, preferably about 12-34. R² is a hydrogen atom or lower alkyl group. The number of carbon atoms in the lower alkyl group represented by R² is usually about 1 or 2.

Examples of compounds of formula (F) include Unidyne DS-401 and DS-403 manufactured by Daikin Industries, Ltd.; Zonyl FSO and FSN by DuPont; and like compounds.

Preferable fluorine-containing surfactants are those that are highly compatible with HFC-245fa and HFC-365mfc, and/or polyols. For example, preferable fluorine-containing surfactants do not exhibit phase separation after a premix containing HFC-245fa, HFC-365mfc, the fluorine-containing surfactant and a polyol is shaken for about 10 minutes and left to stand at about 0-25°C for about 5 hours. The higher the compatibility of fluorine-containing surfactants in HFC-245fa and HFC-365mfc, and/or polyols, the less the loss of blowing agent, i.e., the amount of the blowing agent evaporated, when a premix containing a polyol and a blowing agent is placed in an open system.

The fluorine-containing surfactants are preferably flame retardant although they themselves do not have to be absolutely nonflammable; it is sufficient that mixtures of fluorine-containing surfactants with HFC-245fa and HFC-365fmc are flame retardant. It is preferable that the fluorine-containing surfactants have a flame retardancy corresponding to or better than that of dangerous goods, class 4, petroleum 3. However, the flame retardancy of the fluorine-containing surfactants is not limited insofar as the premix exhibits a flame retardancy approximately the same as or better than that of dangerous goods, class 4, petroleum 3. The use of flame-retardant fluorine-containing surfactants can ensure the blowing agent is flame retardant so that the flame retardancy required upon foaming at work sites can be attained.

Although the boiling point of fluorine-containing surfactants usable in the present invention is not limited, it is usually about 100-300°C, preferably about 120-250°C.

The ratio of glycol compound and/or fluorine-containing surfactant to HFC-245fa and HFC-365fmc in the blowing agent can be suitably selected according to the application, the composition of the ingredients of synthetic resin foams, etc. For example, it is preferable to arrange the ratio of glycol compound and/or fluorine-containing surfactant to HFC-245fa and HFC-365mfc, and such that the vapor pressure at about 40°C of a premix containing HFC-245fa, HFC-365mfc, a glycol compound and/or a fluorine-containing surfactant, a polyol, etc., is usually about 95% or less, preferably about 70-90%, and more preferably about 70-85%, relative to the vapor pressure at 40°C of a premix which has the same component weight ratio as the aforementioned premix except for not containing the glycol compound and/or the fluorine-containing surfactant. More specifically, it is preferable to arrange the ratio of glycol compound and/or fluorine-containing surfactant to HFC-245fa and HFC-365mfc such that when a premix containing (a) a glycol compound and/or a fluorine-containing surfactant: A parts by weight, (b) HFC-245fa and HFC-365mfc: B parts by weight in total and (c) a polyol: C parts by weight is prepared, the vapor pressure at 40°C of the premix containing ingredients (a)-(c) above is about 95% or less, preferably about 90% or less, and more preferably about 85% or less, relative to the vapor pressure of a premix containing (b) HFC-245fa and HFC-365mfc: B parts by weight in total and (c) a polyol: C parts by weight. To measure the difference in vapor pressures, a premix containing HFC-245fa, HFC-365mfc, and a glycol compound and/or a fluorine-containing surfactant in a total of about 20-70 parts by weight based on 100 parts by weight of polyol is used.

In other words, the mixing ratio of glycol compound, fluorine-containing surfactant, HFC-245fa, HFC-365mfc and other ingredients is arranged such that the boiling point of a premix containing HFC-245fa, HFC-365mfc, a polyol, and a glycol compound and/or a fluorine-containing surfactant, i.e., the temperature at which the vapor pressure of the premix becomes 1 atmospheric pressure (about 0.1 MPa), is usually at about 15°C or greater, preferably about 17-35°C, and more preferably about 18-30°C.

In the blowing agent of the present invention containing a glycol compound and/or a fluorine-containing surfactant, the total amount of HFC-245fa and HFC-365mfc is usually about 50 wt.% or more, preferably about 65-99 wt.%, and more preferably about 75-98 wt.%, relative to the total amount of HFC-245fa, HFC-365mfc, and glycol compound and/or fluorine-containing surfactant. If the vapor pressure and flammability of the premix containing HFC-245fa and HFC-365mfc as blowing agents are acceptable, the glycol compounds and/or the fluorine-containing surfactants need not be used.

The ratio of glycol compound and/or fluorine-containing surfactant to HFC-245fa and HFC-365mfc in the blowing agent containing HFC-245fa, HFC-365mfc, and a glycol compound and/or a fluorine-containing surfactant is such that the boiling point of the blowing agent is preferably about 17-35°C, and more preferably about 18-30° C.

The ratio of HFC-245fa to HFC-365mfc in the blowing agent containing HFC-245fa, HFC-365mfc, and a glycol compound and/or a fluorine-containing surfactant is preferably 90-54 wt.% HFC-245fa to 10-46 wt.% HFC-365mfc, and particularly preferably 80-60 wt.% HFC-245fa to 20-40 wt.% HFC-365mfc, counting the total of HFC-245fa and HFC-365mfc as 100 wt.%.

Furthermore, the ratio of HFC-245fa to HFC-365mfc when the halogen-containing compound defined above is contained, i.e., in the blowing agent containing the halogen-containing compound, HFC-245fa, HFC-365mfc, and a glycol compound and/or a fluorine-containing surfactant, is preferably 95-52 wt.% HFC-245fa to 5-48 wt.% HFC-365mfc, and particularly preferably 90-50 wt.% HFC-245fa to 10-50 wt.% HFC-365mfc, counting the total of HFC-245fa and HFC-365mfc as 100 wt.%.

The blowing agent of the present invention is preferably prepared to have a component ratio such that when a premix contains HFC-245fa and HFC-365mfc as base components, the vapor phase of the premix is nonflammable. Moreover, halogenated hydrocarbons, halogenated alcohols, hydrofluoro ethers and like halogen-containing compounds can be added to reduce the vapor pressure and improve flammability of the premix. Furthermore, glycol compounds and fluorine-containing surfactants can be added as compatibilizers to the blowing agent either alone or in combination, regardless of the presence of halogen-containing compounds.

The amount of the blowing agent of the present invention to be used can be suitably selected according to its composition and other factors. The total amount of HFC-245fa and HFC-365mfc is usually about 1-60 parts by weight, preferably about 10-50 parts by weight, and more preferably about 20-45 parts by weight, based on 100 parts by weight of polyol.

The blowing agent of the present invention may further contain low-boiling blowing agents having a boiling point lower than 15°C. Examples of low-boiling blowing agents include 1,1,1,2-tetrafluoroethane and like halogenated hydrocarbons; air, nitrogen, carbon dioxide and like inert gases; etc. 1,1,1,2,3,3,3-Heptafluoropropane is also an example. These blowing agents are usually blended with the premix when used for foaming. When these low-boiling blowing agents are used, the total proportion of HFC-245fa and HFC-365mfc is preferably at least about 20 wt.%, and particularly preferably at least about 40 wt.%.

The blowing agent of the present invention may contain water. In particular, the blowing agent mixture can be used either alone or in combination with water. It is often used with water since water generates carbon dioxide gas during foaming, contributing to the foaming process. However, excessive water may deteriorate the thermal insulation and like properties of foams. The amount of water added is usually about 60 mol% or less relative to the total amount of HFC-245fa, HFC-365mfc and water. Water contained within this range ensures the production of foams with high thermal insulation.

Moreover, the blowing agent of the invention may contain decomposition inhibitors as necessary. Preferable examples of decomposition inhibitors are nitrobenzene, nitromethane and like nitro compounds; a-methylstyrene, *p*-isopropenyltoluene and like aromatic hydrocarbons; isoprene, 2,3-dimethylbutadiene and like aliphatic unsaturated hydrocarbons; 1,2-butylene oxide, epichlorohydrin and like epoxy compounds; *p-t*-butyl catechol, 2,6-di-*t*-butyl-*p-*cresol and like phenolic compounds; isopropyl chloroacetate and like chloroacetate compounds; etc.

The amount of decomposition inhibitor can be suitably selected according to its type and other factors. It is usually about 0.05-5 parts by weight based on 100 parts by weight of the organic blowing agent of the present invention. The decomposition inhibitors may be mixed with the organic blowing agent in advance of foaming or may be added separately when used for foaming.

### Other Ingredients

Known materials for producing polyurethane and polyisocyanurate foams can be used herein as other ingredients. Examples thereof are as described below:

For polyisocyanate compounds, usable are aliphatic, alicyclic, aromatic and like organic isocyanates as described in Keiji Iwata, *Polyurethane Resin Handboook,* Nikkan Kogyo Shinbunsha, pp. 71-98. The most widely used polyisocyanates are 2,4-tolylenediisocyanate (2,4-TDI), 2,6-tolylenediisocyanate (2,6-TDI) and the like. They are usually used as mixtures having a 2,4-TDI/2,6-TDI ratio of 80/20 or 65/35 by weight. Also used is polyphenyl polymethylene polyisocyanate (crude MDI) obtained by phosgenating the condensation product of aniline and formaldehyde.

As polyols, usable are polyether polyols, polyester polyols and the like as described in Keiji Iwata, *Polyurethane Resin Handbook,* Nikkan Kogyo Shinbunsha, pp. 99-117.

Among these ingredients, polyether polyols can be obtained by reacting alkylene oxides with initiators containing active hydrogen atom(s). Usable examples of polyether polyols are those that have 2-8 functional groups and a hydroxyl value of about 300-800 mg KOH/g obtained by reacting ethylene glycol, trimethylolpropane, glycerol, triethanolamine, ethylenediamine, methylglucoside, tolylenediamine, sorbitol, sucrose or like initiators with ethylene oxide, propylene oxide or like alkylene oxides.

Examples of polyester polyols include condensed polyester polyols prepared by dehydrative condensation of adipic acid with glycols or triols; lactone-based polyesters prepared by ring-opening polymerization of caprolactam; polycarbonate diols; and the like. Among these, usable herein are those that have, for example, 2-4 functional groups and a hydroxyl value of about 250-500 mg KOH/g.

Tertiary amines, organometallic compounds, etc., and mixtures thereof can be used as catalysts. Catalysts are usually used in a proportion of about 0.01-10 parts by weight and preferably about 0.1-5 parts by weight based on 100 parts by weight of polyol.

Examples of tertiary amines usable as catalysts are triethylamine, dimethylcyclohexylamine and like monoamines; tetramethylethylenediamine, tetramethylhexamethylenediamine, *N,N,N',N'*-tetramethylhexane-1,6-diamine and like diamines; triethylenediamine, 1,2-dimethylimidazole and like cyclic amines; dimethylaminoethanol and like alcoholamines; etc. Examples of organometallic compounds are stannous octoate, dibutyltin dilaurate, dibutyltin diacetate, etc.

Among the other ingredients for producing polyurethane foams, silicone surfactants, fluorine-containing surfactants other than those described above, etc., can be used as foam conditioning agents. Specific examples are polysiloxane-polyalkylene block copolymer and methylpolysiloxane-based surfactants. Foam conditioning agents are usually used in a proportion of about 0.1-10 parts by weight based on 100 parts by weight of polyol.

### Production Processes

The present invention is directed to a process for producing a polyurethane or polyisocyanurate foam by reacting a polyol and a polyisocyanate compound in the presence of a blowing agent. The process is not limited insofar as the aforementioned blowing agent of the invention is used therein. In the production process, the blowing agent may be blended with a polyol in advance to form a premix.

According to the process for producing a synthetic resin foam of the present invention, a polyurethane or polyisocyanurate foam can be obtained by reacting a polyol with a polyisocyanate compound in the presence of the blowing agent.

The ratio of polyol to polyisocyanate compound can be suitably selected. However, it is usually preferably such that the amount of active hydrogen in the polyols is about 1-3 equivalents per isocyanate group of the polyisocyanate compounds.

Production conditions are as selected in conventional production processes. Any devices can be used insofar as the starting materials can be uniformly blended. For example, using mixers, foaming machines, etc., the desired foams can be produced by thoroughly blending and shaping the polyols, polyisocyanate compounds, blowing agents, catalysts and other additives. Blowing agents and other ingredients are usually dissolved in the polyol components in advance and used as premixes so that uniform foams can be more easily prepared. However, the present invention is not limited to such a process, and blowing agents and other ingredients can be dissolved in the polyisocyanate compounds in advance.

The blowing agents usable in the present invention pose either no or little risk of ozone layer depletion. In particular, when compounds containing halogens other than chlorine and bromine are used, there is absolutely no risk of ozone layer depletion.

Moreover, the blowing agents usable in the present invention barely contribute to global warming.

They have excellent compatibility with polyols. In particular, blowing agents containing glycol compounds and/or fluorine-containing surfactants exhibit superior solubility in polyols.

The premixes usable herein are nonflammable and have an advantageous boiling point. In particular, compared with the use of premixes containing polyols and blowing agents consisting of HFC-245fa or HCF-365mfc, the use of premixes containing polyols and blowing agents comprising glycol compounds, fluorine-containing surfactants or halogen-containing compounds can reduce the loss of blowing agents when the premixes are placed in an open system.

By reacting the respective ingredients in the presence of the blowing agent of the present invention, synthetic resin foams can be produced that have a level of thermal insulation and mechanical strength nearly identical to those of synthetic resin foams produced using HFC-245fa or HCF-365mfc alone as a blowing agent.

### BEST MODE FOR CARRYING OUT THE INVENTION

The polyols and blowing agents used in the Examples below are as follows:
Polyol A: Polyester polyol having a hydroxyl value of 300 mg KOH/g prepared by reacting a glycol with phthalic acid.
Polyol B: Polyether polyol having a hydroxyl value of 440 mg KOH/g prepared by reacting propylene oxide with tolylenediamine.
Polyol C: Polyether polyol having a hydroxyl value of 550 mg KOH/g prepared by reacting propylene oxide with sucrose.
Blowing Agent A: 1,1,1,3,3-Pentafluoropropane; boiling point: 15°C.
Blowing Agent B: 1,1,1,3,3-Pentafluoropropane/1,1,1,3,3-pentafluorobutane (90/10 wt.%); boiling point: 17°C; nonflammable.
Blowing Agent C: 1,1,1,3,3-Pentafluoropropane/1,1,1,3,3-pentafluorobutane (70/30 wt.%); boiling point: 22°C; nonflammable.
Blowing Agent D: 1,1,1,3,3-Pentafluoropropane/1,1,1,3,3-pentafluorobutane (60/40 parts by weight); boiling point: 23° C.
Blowing Agent E: 1,1,1,3,3-Pentafluoropropane/1,1,1,3,3-pentafluorobutane (60/40 parts by weight)/diethylene glycol monoethyl ether acetate (7 parts by weight); boiling point: 27° C.
Blowing Agent F: 1,1,1,3,3-Pentafluoropropane/1,1,1,3,3-pentafluorobutane (60/40 parts by weight)/HO[CH₂C(CH₃)(CH₂OCH₂CF₃)CH₂O]₇H (7 parts by weight); boiling point: 25°C.
Blowing Agent G: 1,1,1,3,3-Pentafluoropropane/1,1,1,3,3-pentafluorobutane/1,1,2,2-tetrafluoromethyl ether (60/15/25 parts by weight)/diethylene glycol monoethyl ether (7 parts by weight); boiling point: 27°C.

### Test Example 1: Solubility in Polyols

Ten grams of one member selected from Blowing Agents A-D and 20 g of Polyol A, B or C, totaling 30 g, were placed in a 50 ml glass bottle with a screw stopper and shaken for 10 minutes by a shaker. The bottle was left to stand at 25°C for 1 hour. The occurrence of separation was visually observed. Table 1 shows the results. Mixtures were evaluated according to the following scale:
(i): Uniformly dissolved with no separation; (ii) Barely uniform though no separation; and (iii) Separation.

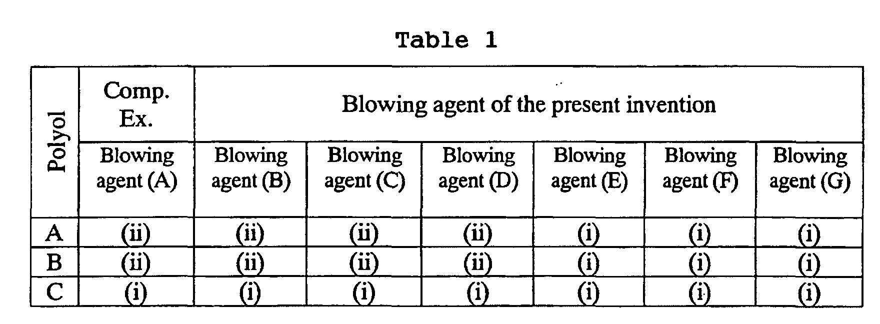

As is clear from the results shown in Table 1, the inventors confirmed that the addition of the compatibilizers of the present invention improves the compatibility, thereby producing stable premixes. Moreover, it was also confirmed that the blowing agent consisting of HFC-245fa and HFC-365mfc can be uniformly dissolved.

### Reference Example 1: Flammability Test

A mixed gas of HFC-245fa and HFC-365mfc (65:35 by weight) was charged into a 12 l glass flask in a ratio of 6 parts of the mixed gas and 94 parts of air by volume to have 1 atmospheric pressure at a gas temperature of 25°C. Tungsten electrodes with a diameter of 1 mm (distance between the electrodes: 6.4 mm) was placed at the center of the flask to give off sparks for 0.4 seconds at 15 kV and 30 mA. In this event, the flame spread from the center to the top of the flask upward staying within 90 degrees. Thereby, the inventors confirmed that the mixed gas was nonflammable.

In the same manner, a mixed gas of HFC-245fa and HFC-365mfc (65:35 by weight) was charged into a glass flask in a ratio of 8.6 parts of the mixed gas and 91.4 parts of air by volume to have 1 atmospheric pressure at a temperature of 25°C. An experiment conducted in the same manner revealed that this mixed gas was nonflammable.

A mixed gas of HFC-245fa and HFC-365mfc (55:45 by weight) was charged into a glass flask in a ratio of 7.1 parts of the mixed gas and 92.9 parts of air by volume to have 1 atmospheric pressure at a temperature of 25°C. In this case, it was observed that the flame spread over 90 degrees, revealing that this mixed gas was flammable.

### Reference Example 2

Five grams of liquid HFC-245fa and 7.5 g of liquid HFC-365mfc were introduced into a 50 cc glass bottle. The HFC-245fa and HFC-365mfc were stirred at 25°C for 15 minutes while the bottle was closed with paraffin paper. The vapor phase was sampled and examined by gas chromatography, revealing that the HFC-245fa/HFC-365mfc ratio was 62:38 by weight. The flammability of a gas having the same composition as this gas was measured in the same manner as in Reference Example 1, revealing it to be nonflammable.

### Comparative Example 1

Four grams of HFC-245fa and 6 g of HFC-365mfc were added to 25 g of a system solution containing Polyol A. The composition of the vapor phase thereof was investigated in the same manner as in Reference Example 2. The HFC-245fa/HFC-365mfc ratio was 54:46 by weight. The flammability of a gas having the same composition as this gas was measured in the same manner as in Reference Example 1, thereby exhibiting flammability.

### Example 2

Five grams of HFC-245fa and 5 g of HFC-365mfc were added to 25 g of a system solution containing Polyol A. The composition of the vapor phase thereof was investigated in the same manner as in Reference Example 2. The HFC-245fa/HFC-365mfc ratio was 65:35 by weight. The flammability of a gas having the same composition as this gas was measured in the same manner as in Reference Example 1, thereby exhibiting nonflammability.

### Example 3

Five grams of HFC-245fa, 5 g of HFC-365mfc and 0.7 g of diethylene glycol monoethyl acetate were added to 25 g of a system solution containing Polyol A. The composition of the vapor phase thereof was investigated in the same manner as in Reference Example 2. The HFC-245fa/HFC-365mfc ratio was 65:35 by weight. The flammability of a gas having the same composition as this gas was measured in the same manner as in Reference Example 1, thereby exhibiting nonflammability.

### Example 4

Blowing Agent G containing 10 g of HFC-245fa, HFC-365mfc and 1,1,2,2-tetrafluoromethyl ether in total and further containing 0.7 g of diethylene glycol monoethyl ether was added to 25 g of a system solution containing Polyol A. The composition of the vapor phase thereof was investigated in the same manner as in Reference Example 2. The ratio of HFC-245fa relative to the total of HFC-365mfc and 1,1,2,2-tetrafluoromethyl ether was 76:24 by weight. The flammability of a gas having the same composition as this gas was measured in the same manner as in Reference Example 1, thereby exhibiting nonflammability.

### Example 5

Blowing Agent F containing 10 g of HFC-245fa and HFC-365mfc in total and further containing 0.7 g of HO[CH₂C(CH₃)(CH₂OCH₂CF₃)CH₂O]₇H was added to 25 g of a system solution containing Polyol A. The composition of the vapor phase thereof was investigated in the same manner as in Reference Example 2. The HFC-245fa/HFC-365mfc ratio was 73:27 by weight. The flammability of a gas having the same composition as this gas was measured in the same manner as in Reference Example 1, thereby exhibiting nonflammability.

### Example 6

Five grams of HFC-245fa and 5 g of HFC-365mfc were added to 25 g of a system solution containing Polyol B. The composition of the vapor phase thereof was investigated in the same manner as in Reference Example 2. The HFC-245fa/HFC-365mfc ratio was 62:38 by weight. The flammability of a gas having the same composition as this gas was measured in the same manner as in Reference Example 1, thereby exhibiting nonflammability.

### Comparative Example 2

HFC-245fa (4.4 g) and 5.6 g of HFC-365mfc were added to 25 g of a system solution containing Polyol A. The composition of the vapor phase thereof was investigated in the same manner as in Reference Example 2. The HFC-245fa/HFC-365mfc ratio was 58:42 by weight. The flammability of a gas having the same composition as this gas was measured in the same manner as in Reference Example 1, thereby exhibiting flammability.

### Example 7

HFC-245fa (5.1 g) and 4.9 g of HFC-365mfc were added to 25 g of a system solution containing Polyol A. The composition of the vapor phase thereof was investigated in the same manner as in Reference Example 2 except that the temperature was 40°C. The HFC-245fa/HFC-365mfc ratio was 65.5:34.5 by weight. The flammability of a gas having the same composition as this gas was measured in the same manner as in Reference Example 1 except that the measurement temperature was 40°C, thereby exhibiting nonflammability.

### Comparative Example 3

HFC-245fa (4.6 g) and 5.4 g of HFC-365mfc were added to 25 g of a system solution containing Polyol A. The composition of the vapor phase thereof was investigated in the same manner as in Reference Example 2 except that the temperature was 40°C. The HFC-245fa/HFC-365mfc ratio was 60:40 by weight. The flammability of a gas having the same composition as this gas was measured in the same manner as in Reference Example 1, thereby exhibiting flammability.

### Examples 8-12 and Comparative Example 4

### Production of Foams

One hundred parts by weight of Polyol B, 1.5 parts by weight of silicone foam conditioning agent, 1 part by weight of water, *N,N,N',N'*-tetramethylhexane-1,6-diamine in an amount necessary to attain a rise time of 70 seconds as a catalyst, and a blowing agent were blended by vigorous stirring. The premix thus prepared and 112 parts by weight of crude polymethylene polyphenyl isocyanate (MR-100 manufactured by Nippon Polyurethane Industry Co., Ltd.) was blended by vigorous stirring to foam, giving a rigid polyurethane foam. The blowing agent was used in an amount such that the foam acquired a core density of 25±1 kg/m³. The flammability of a gas having the same composition as the premix in the vapor phase was measured in the same manner as in Example 1, thereby showing nonflammability.

Regarding the foams thus obtained, the physical properties were measured 1 day after foaming, and after 1 week of aging conducted at -20°C or after 1 week of aging conducted at 25°C. Results of the measurement are shown in Table 2. The foams were evaluated according to JIS A 9514.

**Table 2**

| | | Comp. Ex. 4 | Ex.8 | Ex. 9 | Ex. 10 | Ex. 11 | Ex.12 |
|---|---|---|---|---|---|---|---|
| Blowing agent | | A | C | D | E | F | G |
| Amount of blowing agent | | 35 | 36 | 36.4 | 39.6 | 39.6 | 40 |
| 1 day after foaming | Density (kg/m³) | 25 | 25 | 25 | 25 | 25 | 25 |
| | Thermal conductivity (mW/m·K) | 23.4 | 23.4 | 23.5 | 23.6 | 23.5 | 23.2 |
| | Compressive strength (kg/m²) | 1.8 | 1.8 | 1.8 | 1.8 | 1.78 | 1.8 |
| After 1 week at -20°C | Dimensional change (%) | -8.3 | -8.5 | -8.6 | -8.6 | -8.7 | -8.4 |
| | Thermal conductivity change (%) | +5.2 | +4.7 | +4.5 | +4.0 | +4.5 | +4.5 |
| | Strength change (%) | -22.2 | -21.5 | -20.0 | -18.0 | -20.0 | -19 |
| After 1 week at 25°C | Dimensional change (%) | -1.9 | -1.7 | -1.6 | -1.5 | -1.7 | -1.5 |
| | Thermal conductivity change (%) | +9.4 | +7.7 | +6.3 | +5.5 | +6.0 | +6 |
| | Strength change (%) | -3.0 | -5.0 | -7.0 | -6.5 | -7.5 | -6.7 |

As is clear from the results shown in Table 2, the inventors confirmed that polyurethane foams having excellent properties can be obtained using the mixed blowing agents of the present invention. In particular, using the blowing agents of the present invention, foams can be obtained that have thermal conductivity and compressive strength nearly identical to those of the foam prepared with HFC-245fa alone. Furthermore, with respect to thermal conductivity change and strength change, foams prepared with the blowing agents of the present invention exhibited values nearly identical to those exhibited by the foam prepared with HFC-245fa alone.

### Reference Example 3

Shown below are the thermal conductivities of the gaseous blowing ingredients measured at 1 atmospheric pressure and 50°C according to the transient hot-wire method:
HFC-245fa: 15.2 mW/mK
HFC-365mfc: 15.5 mW/mK

### INDUSTRIAL APPLICABILITY

By reacting respective ingredients in the presence of the blowing agent of the present invention, synthetic resin foams can be produced that have excellent thermal insulation and mechanical strength nearly identical to those of synthetic resin foams produced using HFC-245fa or HCF-365mfc alone as a blowing agent.

## Claims

1. A process for producing a synthetic resin foam comprising the step of reacting a polyol with a polyisocyanate compound in the presence of a blowing agent to give a polyurethane or polyisocyanurate foam,
the blowing agent being a mixture of 51-90 wt.% 1,1,1,3,3-pentafluoropropane and 49-10 wt.% 1,1,1,3,3-pentafluorobutane.

2. The process according to claim 1, wherein the blowing agent comprises a mixture of 60-80 wt.% 1,1,1,3,3-pentafluoropropane and 40-20 wt.% 1,1,1,3,3-pentafluorobutane.

3. A blowing agent for polyurethane or polyisocyanurate comprising a mixture of 51-90 wt.% 1,1,1,3,3-pentafluoropropane and 49-10 wt.% 1,1,1,3,3-pentafluorobutane.

4. The blowing agent according to claim 3 comprising a mixture of 60-80 wt.% 1,1,1,3,3-pentafluoropropane and 40-20 wt.% 1,1,1,3,3-pentafluorobutane.

5. A process for producing a resin foam comprising the step of reacting a polyol with a polyisocyanate compound in the presence of a blowing agent to give a polyurethane or polyisocyanurate foam,
the blowing agent and the polyol being used as a premix,
the blowing agent being a mixture comprising 1,1,1,3,3-pentafluoropropane and 1,1,1,3,3-pentafluorobutane,
the weight ratio of 1,1,1,3,3-pentafluoropropane/1,1,1,3,3-pentafluorobutane in the vapor phase of the premix being at least 1.5 at 25°C.

6. The process for producing a resin foam according to claim 5, wherein the weight ratio of 1,1,1,3,3-pentafluoropropane/1,1,1,3,3-pentafluorobutane in the vapor phase of the premix is at least 1.7 at 25°C.

7. The process for producing a resin foam according to claim 5 or 6, wherein the blowing agent is the mixture further comprises at least one halogen-containing compound with a boiling point of at least 15°C selected from the group consisting of halogenated hydrocarbons, halogenated alcohols and halogenated ethers.

8. The process for producing a resin foam according to claim 7, wherein the vapor pressure at 40°C of the premix is 95% or less relative to the vapor pressure at 40°C of a premix which has the same weight ratio of the blowing agent and the same weight ratio of HFC-245fa to HFC-365mfc as the aforementioned premix except for not containing the halogen-containing compound with a boiling point of at least 15°C.

9. The process for producing a resin foam according to claim 7, wherein the halogen-containing compound with a boiling point of at least 15°C is at least one compound selected from the group consisting of the compounds shown in (A)-(C) below:
(A) halogenated hydrocarbons with a boiling point of at least 15°C given in the group consisting of 3,3,4,4,5,5,6,6,6-nonafluoro-1-hexene, 2,3,3,4,4,5,5-heptafluoro-1-pentene, perfluoro-1-butene, perfluorohexene, perfluorononene, perfluorohexane, perfluorocyclobutane, 1,1,2,2,3,3,4,4-octafluorobutane, 1,1,1,2,2,3,4,5,5,5-decafluoropentane, 2-trifluoromethyl-1,1,1,2,3,4,5,5,5-nonafluoropentane, 2-trifluoromethyl-1,1,1,3,3,4,4,5,5,5-decafluoropentane, 1,1,2,2,3,3,4,4,5,5,6,6,6-tridecafluoropentane, 1,2,3,3,4,4-hexafluorocyclobutane, 2,3,3,4,4,5,5-pentafluorocyclopentane, 1,1,2,3,4,4-hexafluoro-1,2,3,4-tetrachlorobutane, 2,3-dichlorooctafluorobutane, 1,4-dichlorooctafluorobutane, 1-chloro-1,1,2,2,3,3,4,4-octafluorobutane, 1-chloro-1,1,2,2,3,3,4,4,5,5,6,6-dodecafluorohexane, 1,2-dichlorohexafluorocyclobutane, iodotrifluoromethyl, 1-iodononafluorobutane, 1-bromopropane and 2-bromobutane;
(B) halogenated alcohols with a boiling point of at least 15°C given in the group consisting of 1,1,1-trifluoroethanol, 1,1,1,2,2-pentafluoropropanol, 2,2,3,3-tetrafluoropropanol, 1,1,1,2,2-pentafluorobutanol, 1,1,1,2,3,3-hexafluorobutanol and 1,1,1,3,3,3-hexafluoro-2-ol; and
(C) halogenated ethers with a boiling point of at least 15°C given in the group consisting of 1,1,2,2-tetrafluoroethyl difluoromethyl ether, 1,1,2,2-tetrafluoroethyl methyl ether, 2,2,2-trifluoroethyl-1,1,2,2 tetrafluoroethylether, 1,1,2,3,3,3-hexafluoropropyl methyl ether, 2,2,3,3-tetrafluoropropyl 1,1,2,2-tetrafluoroethyl ether, 1,1,2,2-tetrafluoroethyl 2,2,3,3,3-pentafluoropropyl ether, 1,1,2,3,3,3-hexafluoropropyl 2,2,3,3,3-pentafluoropropyl ether, nonafluorobutyl methyl ether, nonafluorobutyl ethyl ether, 1-trifluoromethyl-1,2,2,2-tetrafluoroethyl methyl ether, perfluoropropyl methyl ether, 2,2,3,3,3-pentafluoropropyl difluoromethyl ether, 1,1,2,3,3,3-hexafluoropropyl 2,2,2-trifluoroethyl ether, 2,2,3,4,4,4-hexafluorobutyl difluoromethyl ether, 1,1,2,3,3,3-hexafluoropropyl 1,1,2,2-tetrafluoropropyl ether, 1,1,2,3,3-pentafluoro-2-trifluoromethyl methyl ether, perfluoropropylepoxide, 1,2,2-trifluoroethylene trifluoromethyl ether and 1,2,2-trifluoroethylene 1,1,2,2,3,3,3-heptafluoropropyl ether.

10. The process for producing a resin foam according to claim 5, wherein the blowing agent is the mixture further comprising a glycol compound and/or a fluorine-containing surfactant.

11. The process for producing a resin foam according to claim 10, wherein the vapor pressure at 40°C of the premix is 95% or less relative to the vapor pressure at 40°C of a premix which has the same component weight ratio as the aforementioned premix except for not containing the glycol compound and/or the fluorine-containing surfactant.

12. The process for producing a resin foam according to claim 10, wherein the glycol compound is at least one member selected from the group consisting of compounds represented by formulae (A), (B) and (C):
CₐH₂ₐ₊₁(OCH₂CH₂O)_{b}C_{c}H_{2c+1} (A)
wherein a represents 0, 1, 2, 3 or 4; b represents 1, 2, 3 or 4; and c represents 0, 1, 2, 3 or 4;
C_{d}H_{2d+1}CO(OCH₂CH₂O)ₑCOC_{f}H_{2f+1} (B)
wherein d represents 0, 1, 2, 3 or 4; e represents 1, 2, 3 or 4; and f represents 0, 1, 2, 3 or 4; and
CᵢH₂ᵢ₊₁CO(OCH₂CH₂O)ⱼCₖH₂ₖ₊₁ (C)
wherein i represents 0, 1, 2, 3 or 4; j represents 1, 2, 3 or 4; and k represents 0, 1, 2, 3 or 4.

13. The process for producing a resin foam according to claim 10, wherein the fluorine-containing surfactant is at least one member selected from group consisting of compounds represented by formulae (D), (E) and (F):
HO[CH₂C(R)(CH₂OCH₂R^{fa})CH₂O]ₙH (D)
wherein n is from 3 to 30; R^{fa} is -(CF₂)_{a'}H with a' being from 1 to 8, or -(CF₂)_{b'}F with b' being from 1 to 8; and R is hydrogen or a lower alkyl group;
HO[CH(CH₂R^{fb})CH₂O]ₘH (E)
wherein m is from 3 to 30; and R^{fb} is -(CF₂)_{c'}H with c' being from 1 to 8, or -(CF₂)_{d'}F with d' being from 1 to 8; and
R¹O[CH(R⁰)(CH₂)₁ₐO]_{1b}R² (F)
wherein R⁰ is H or CH₃; R¹ is a fluorine-containing alkyl group or a substitution product thereof; R² is hydrogen or a lower alkyl group; la is from 1 to 3; and 1b is from 4 to 15.

14. The process for producing a resin foam according to claim 5, wherein the blowing agent is the mixture further comprising:
(i) at least one halogen-containing compound with a boiling point of at least 15°C selected from the group consisting of halogenated hydrocarbons, halogenated alcohols and halogenated ethers; and
(ii) a glycol compound and/or a fluorine-containing surfactant.

15. The process for producing a resin foam according to claim 14, wherein the vapor pressure at 40°C of the premix is 95% or less relative to the vapor pressure at 40°C of a premix which has the same component weight ratio as the aforementioned premix except for containing neither (i) the halogen-containing compound with a boiling point of at least 15°C nor (ii) the glycol compound and/or the fluorine-containing surfactant.

16. The process for producing a resin foam according to claim 14, wherein the halogen-containing compound with a boiling point of at least 15°C is at least one compound selected from the group consisting of the compounds shown in (A)-(C) below:
(A) halogenated hydrocarbons with a boiling point of at least 15°C given in the group consisting of 3,3,4,4,5,5,6,6,6-nonafluoro-1-hexene, 2,3,3,4,4,5,5-heptafluoro-1-pentene, perfluoro-1-butene, perfluorohexene, perfluorononene, perfluorohexane, perfluorocyclobutane, 1,1,2,2,3,3,4,4-octafluorobutane, 1,1,1,2,2,3,4,5,5,5-decafluoropentane, 2-trifluoromethyl-1,1,1,2,3,4,5,5,5-nonafluoropentane, 2-trifluoromethyl-1,1,1,3,3,4,4,5,5,5-decafluoropentane, 1,1,2,2,3,3,4,4,5,5,6,6,6-tridecafluoropentane, 1,2,3,3,4,4-hexafluorocyclobutane, 2,3,3,4,4,5,5-pentafluorocyclopentane, 1,1,2,3,4,4-hexafluoro-1,2,3,4-tetrachlorobutane, 2,3-dichlorooctafluorobutane, 1,4-dichlorooctafluorobutane, 1-chloro-1,1,2,2,3,3,4,4-octafluorobutane, 1-chloro-1,1,2,2,3,3,4,4,5,5,6,6-dodecafluorohexane, 1,2-dichlorohexafluorocyclobutane, iodotrifluoromethyl, 1-iodononafluorobutane, 1-bromopropane and 2-bromobutane;
(B) halogenated alcohols with a boiling point of at least 15°C given in the group consisting of 1,1,1-trifluoroethanol, 1,1,1,2,2-pentafluoropropanol, 2,2,3,3-tetrafluoropropanol, 1,1,1,2,2-pentafluorobutanol, 1,1,1,2,3,3-hexafluorobutanol and 1,1,1,3,3,3-hexafluoro-2-ol; and
(C) halogenated ethers with a boiling point of at least 15°C given in the group consisting of 1,1,2,2-tetrafluoroethyl difluoromethyl ether, 1,1,2,2-tetrafluoroethyl methyl ether, 2,2,2-trifluoroethyl-1,1,2,2 tetrafluoroethylether, 1,1,2,3,3,3-hexafluoropropyl methyl ether, 2,2,3,3-tetrafluoropropyl 1,1,2,2-tetrafluoroethyl ether, 1,1,2,2-tetrafluoroethyl 2,2,3,3,3-pentafluoropropyl ether, 1,1,2,3,3,3-hexafluoropropyl 2,2,3,3,3-pentafluoropropyl ether, nonafluorobutyl methyl ether, nonafluorobutyl ethyl ether, 1-trifluoromethyl-1,2,2,2-tetrafluoroethyl methyl ether, perfluoropropyl methyl ether, 2,2,3,3,3-pentafluoropropyl difluoromethyl ether, 1,1,2,3,3,3-hexafluoropropyl 2,2,2-trifluoroethyl ether, 2,2,3,4,4,4-hexafluorobutyl difluoromethyl ether, 1,1,2,3,3,3-hexafluoropropyl 1,1,2,2-tetrafluoropropyl ether, 1,1,2,3,3-pentafluoro-2-trifluoromethyl methyl ether, perfluoropropylepoxide, 1,2,2-trifluoroethylene trifluoromethyl ether and 1,2,2-trifluoroethylene 1,1,2,2,3,3,3-heptafluoropropyl ether.

17. The process for producing a resin foam according to claim 14, wherein the glycol compound is at least one member selected from the group consisting of compounds represented by formulae (A), (B) and (C):
CₐH₂ₐ₊₁(OCH₂CH₂O)_{b}C_{c}H_{2c+1} (A)
wherein a represents 0, 1, 2, 3 or 4; b represents 1, 2, 3 or 4; and c represents 0, 1, 2, 3 or 4;
C_{d}H_{2d+1}CO(OCH₂CH₂O)ₑCOC_{f}H_{2f+1} (B)
wherein d represents 0, 1, 2, 3 or 4; e represents 1, 2, 3 or 4; and f represents 0, 1, 2, 3 or 4; and
CᵢH₂ᵢ₊₁CO(OCH₂CH₂O)ⱼCₖH₂ₖ₊₁ (C)
wherein i represents 0, 1, 2, 3 or 4; j represents 1, 2, 3 or 4; and k represents 0, 1, 2, 3 or 4.

18. The process for producing a resin foam according to claim 14, wherein the fluorine-containing surfactant is at least one member selected from the group consisting of compounds represented by formulae (D), (E) and (F):
HO[CH₂C(R)(CH₂OCH₂R^{fa})CH₂O]ₙH (D)
wherein n is from 3 to 30; R^{fa} is -(CF₂)_{a'}H with a' being from 1 to 8, or -(CF₂)_{b'}F with b' being from 1 to 8; and R is hydrogen or a lower alkyl group;
HO[CH(CH₂R^{fb})CH₂O]ₘH (E)
wherein m is from 3 to 30; and R^{fb} is -(CF₂)_{c'}H with c' being from 1 to 8, or -(CF₂)_{d'}F with d' being from 1 to 8; and
R¹O[CH(R⁰)(CH₂)₁ₐO]_{1b}R² (F)
wherein R⁰ is H or CH₃; R¹ is a fluorine-containing alkyl group or a substitution product thereof; R² is hydrogen or a lower alkyl group; 1a is from 1 to 3; and 1b is from 4 to 15.

19. A blowing agent for polyurethane or polyisocyanurate comprising 1,1,1,3,3-pentafluoropropane and 1,1,1,3,3-pentafluorobutane,
wherein the weight ratio of 1,1,1,3,3-pentafluoropropane/1,1,1,3,3-pentafluorobutane in the vapor phase of a premix containing the blowing agent and a polyol is at least 1.5 at 25°C.

20. The blowing agent according to claim 19, wherein the weight ratio of 1,1,1,3,3-pentafluoropropane/1,1,1,3,3-pentafluorobutane is at least 1.7 at 25°C.

21. The blowing agent according to claim 19 further comprising at least one halogen-containing compound with a boiling point of at least 15°C selected from the group consisting of halogenated hydrocarbons, halogenated alcohols and halogenated ethers.

22. The blowing agent according to claim 21, wherein when a premix containing the blowing agent and a polyol is prepared, the vapor pressure at 40°C of the premix is 95% or less relative to the vapor pressure at 40°C of a premix which has the same weight ratio of the blowing agent and the same weight ratio of HFC-245fa to HFC-365mfc as the aforementioned premix except for not containing the halogen-containing compound with a boiling point of at least 15°C.

23. The blowing agent according to claim 21, wherein the halogen-containing compound with a boiling point of at least 15°C is at least one compound selected from the group consisting of the compounds shown in (A)-(C) below:
(A) halogenated hydrocarbons with a boiling point of at least 15°C given in the group consisting of 3,3,4,4,5,5,6,6,6-nonafluoro-1-hexene, 2,3,3,4,4,5,5-heptafluoro-1-pentene, perfluoro-1-butene, perfluorohexene, perfluorononene, perfluorohexane, perfluorocyclobutane, 1,1,2,2,3,3,4,4-octafluorobutane, 1,1,1,2,2,3,4,5,5,5-decafluoropentane, 2-trifluoromethyl-1,1,1,2,3,4,5,5,5-nonafluoropentane, 2-trifluoromethyl-1,1,1,3,3,4,4,5,5,5-decafluoropentane, 1,1,2,2,3,3,4,4,5,5,6,6,6-tridecafluoropentane, 1,2,3,3,4,4-hexafluorocyclobutane, 2,3,3,4,4,5,5-pentafluorocyclopentane, 1,1,2,3,4,4-hexafluoro-1,2,3,4-tetrachlorobutane, 2,3-dichlorooctafluorobutane, 1,4-dichlorooctafluorobutane, 1-chloro-1,1,2,2,3,3,4,4-octafluorobutane, 1-chloro-1,1,2,2,3,3,4,4,5,5,6,6-dodecafluorohexane, 1,2-dichlorohexafluorocyclobutane, iodotrifluoromethyl, 1-iodononafluorobutane, 1-bromopropane and 2-bromobutane;
(B) halogenated alcohols with a boiling point of at least 15°C given in the group consisting of 1,1,1-trifluoroethanol, 1,1,1,2,2-pentafluoropropanol, 2,2,3,3-tetrafluoropropanol, 1,1,1,2,2-pentafluorobutanol, 1,1,1,2,3,3-hexafluorobutanol and 1,1,1,3,3,3-hexafluoro-2-ol; and
(C) halogenated ethers with a boiling point of at least 15°C given in the group consisting of 1,1,2,2-tetrafluoroethyl difluoromethyl ether, 1,1,2,2-tetrafluoroethyl methyl ether, 2,2,2-trifluoroethyl-1,1,2,2 tetrafluoroethylether, 1,1,2,3,3,3-hexafluoropropyl methyl ether, 2,2,3,3-tetrafluoropropyl 1,1,2,2-tetrafluoroethyl ether, 1,1,2,2-tetrafluoroethyl 2,2,3,3,3-pentafluoropropyl ether, 1,1,2,3,3,3-hexafluoropropyl 2,2,3,3,3-pentafluoropropyl ether, nonafluorobutyl methyl ether, nonafluorobutyl ethyl ether, 1-trifluoromethyl-1,2,2,2-tetrafluoroethyl methyl ether, perfluoropropyl methyl ether, 2,2,3,3,3-pentafluoropropyl difluoromethyl ether, 1,1,2,3,3,3-hexafluoropropyl 2,2,2-trifluoroethyl ether, 2,2,3,4,4,4-hexafluorobutyl difluoromethyl ether, 1,1,2,3,3,3-hexafluoropropyl 1,1,2,2-tetrafluoropropyl ether, 1,1,2,3,3-pentafluoro-2-trifluoromethyl methyl ether, perfluoropropylepoxide, 1,2,2-trifluoroethylene trifluoromethyl ether and 1,2,2-trifluoroethylene 1,1,2,2,3,3,3-heptafluoropropyl ether.

24. The blowing agent according to claim 19 further comprising a glycol compound and/or a fluorine-containing surfactant.

25. The blowing agent according to claim 24, wherein when a premix containing a polyol and the blowing agent is prepared, the vapor pressure at 40°C of the premix is 95% or less relative to the vapor pressure at 40°C of a premix which has the same component weight ratio as the aforementioned premix except for not containing the glycol compound and/or the fluorine-containing surfactant.

26. The blowing agent according to claim 24, wherein the glycol compound is at least one member selected from the group consisting of compounds represented by formulae (A), (B) and (C):
CₐH₂ₐ₊₁(OCH₂CH₂O)_{b}C_{c}H_{2c+1} (A)
wherein a represents 0, 1, 2, 3 or 4; b represents 1, 2, 3 or 4; and c represents 0, 1, 2, 3 or 4;
C_{d}H_{2d+1}CO(OCH₂CH₂O)ₑCOC_{f}H_{2f+1} (B)
wherein d represents 0, 1, 2, 3 or 4; e represents 1, 2, 3 or 4; and f represents 0, 1, 2, 3 or 4; and
CᵢH₂ᵢ₊₁CO(OCH₂CH₂O)ⱼCₖH₂ₖ₊₁ (C)
wherein i represents 0, 1, 2, 3 or 4; j represents 1, 2, 3 or 4; and k represents 0, 1, 2, 3 or 4.

27. The blowing agent according to claim 24, wherein the fluorine-containing surfactant is at least one member selected from group consisting of compounds represented by formulae (D), (E) and (F):
HO[CH₂C(R)(CH₂OCH₂R^{fa})CH₂O]ₙH (D)
wherein n is from 3 to 30; R^{fa} is -(CF₂)_{a'}H with a' being from 1 to 8, or -(CF₂)_{b'}F with b' being from 1 to 8; and R is hydrogen or a lower alkyl group;
HO[CH(CH₂R^{fb})CH₂O]ₘH (E)
wherein m is from 3 to 30; and R^{fb} is -(CF₂)_{c'}H with c' being from 1 to 8, or -(CF₂)_{d'}F with d' being from 1 to 8; and
R¹O[CH(R⁰)(CH₂)₁ₐO]_{1b}R² (F)
wherein R⁰ is H or CH₃; R¹ is a fluorine-containing alkyl group or a substitution product thereof; R² is hydrogen or a lower alkyl group; 1a is from 1 to 3; and 1b is from 4 to 15.

28. The blowing agent according to claim 19 further comprising:
(i) at least one halogen-containing compound with a boiling point of at least 15°C selected from the group consisting of halogenated hydrocarbons, halogenated alcohols and halogenated ethers; and
(ii) a glycol compound and/or a fluorine-containing surfactant.

29. The blowing agent according to claim 28, wherein when a premix containing a polyol and the blowing agent is prepared, the vapor pressure at 40°C of the premix is 95% or less relative to the vapor pressure at 40°C of a premix which has the same component weight ratio as the aforementioned premix except for containing neither (i) the halogen-containing compound with a boiling point of at least 15°C nor (ii) the glycol compound and/or the fluorine-containing surfactant.

30. The blowing agent according to claim 28, wherein the halogen-containing compound with a boiling point of at least 15°C is at least one compound selected from the group consisting of the compounds shown in (A)-(C) below:
(A) halogenated hydrocarbons with a boiling point of at least 15°C given in the group consisting of 3,3,4,4,5,5,6,6,6-nonafluoro-1-hexene, 2,3,3,4,4,5,5-heptafluoro-1-pentene, perfluoro-1-butene, perfluorohexene, perfluorononene, perfluorohexane, perfluorocyclobutane, 1,1,2,2,3,3,4,4-octafluorobutane, 1,1,1,2,2,3,4,5,5,5-decafluoropentane, 2-trifluoromethyl-1,1,1,2,3,4,5,5,5-nonafluoropentane, 2-trifluoromethyl-1,1,1,3,3,4,4,5,5,5-decafluoropentane, 1,1,2,2,3,3,4,4,5,5,6,6,6-tridecafluoropentane, 1,2,3,3,4,4-hexafluorocyclobutane, 2,3,3,4,4,5,5-pentafluorocyclopentane, 1,1,2,3,4,4-hexafluoro-1,2,3,4-tetrachlorobutane, 2,3-dichlorooctafluorobutane, 1,4-dichlorooctafluorobutane, 1-chloro-1,1,2,2,3,3,4,4-octafluorobutane, 1-chloro-1,1,2,2,3,3,4,4,5,5,6,6-dodecafluorohexane, 1,2-dichlorohexafluorocyclobutane, iodotrifluoromethyl, 1-iodononafluorobutane, 1-bromopropane and 2-bromobutane;
(B) halogenated alcohols with a boiling point of at least 15°C given in the group consisting of 1,1,1-trifluoroethanol, 1,1,1,2,2-pentafluoropropanol, 2,2,3,3-tetrafluoropropanol, 1,1,1,2,2-pentafluorobutanol, 1,1,1,2,3,3-hexafluorobutanol and 1,1,1,3,3,3-hexafluoro-2-ol; and
(C) halogenated ethers with a boiling point of at least 15°C given in the group consisting of 1,1,2,2-tetrafluoroethyl difluoromethyl ether, 1,1,2,2-tetrafluoroethyl methyl ether, 2,2,2-trifluoroethyl-1,1,2,2 tetrafluoroethylether, 1,1,2,3,3,3-hexafluoropropyl methyl ether, 2,2,3,3-tetrafluoropropyl 1,1,2,2-tetrafluoroethyl ether, 1,1,2,2-tetrafluoroethyl 2,2,3,3,3-pentafluoropropyl ether, 1,1,2,3,3,3-hexafluoropropyl 2,2,3,3,3-pentafluoropropyl ether, nonafluorobutyl methyl ether, nonafluorobutyl ethyl ether, 1-trifluoromethyl-1,2,2,2-tetrafluoroethyl methyl ether, perfluoropropyl methyl ether, 2,2,3,3,3-pentafluoropropyl difluoromethyl ether, 1,1,2,3,3,3-hexafluoropropyl 2,2,2-trifluoroethyl ether, 2,2,3,4,4,4-hexafluorobutyl difluoromethyl ether, 1,1,2,3,3,3-hexafluoropropyl 1,1,2,2-tetrafluoropropyl ether, 1,1,2,3,3-pentafluoro-2-trifluoromethyl methyl ether, perfluoropropylepoxide, 1,2,2-trifluoroethylene trifluoromethyl ether and 1,2,2-trifluoroethylene 1,1,2,2,3,3,3-heptafluoropropyl ether.

31. The blowing agent according to claim 28, wherein the glycol compound is at least one member selected from the group consisting of compounds represented by formulae (A), (B) and (C):
CₐH₂ₐ₊₁(OCH₂CH₂O)_{b}C_{c}H_{2c+1} (A)
wherein a represents 0, 1, 2, 3 or 4; b represents 1, 2, 3 or 4; and c represents 0, 1, 2, 3 or 4;
C_{d}H_{2d+1}CO(OCH₂CH₂O)ₑCOC_{f}H_{2f+1} (B)
wherein d represents 0, 1, 2, 3 or 4; e represents 1, 2, 3 or 4; and f represents 0, 1, 2, 3 or 4; and
CᵢH₂ᵢ₊₁CO(OCH₂CH₂O)ⱼCₖH₂ₖ₊₁ (C)
wherein i represents 0, 1, 2, 3 or 4; j represents 1, 2, 3 or 4; and k represents 0, 1, 2, 3 or 4.

32. The blowing agent according to claim 28, wherein the fluorine-containing surfactant is at least one member selected from the group consisting of compounds represented by formulae (D), (E) and (F):
HO[CH₂C(R)(CH₂OCH₂R^{fa})CH₂O]ₙH (D)
wherein n is from 3 to 30; R^{fa} is -(CF₂)_{a'}H with a' being from 1 to 8, or -(CF₂)_{b'}F with b' being from 1 to 8; and R is hydrogen or a lower alkyl group;
HO[CH(CH₂R^{fb})CH₂O]ₘH (E)
wherein m is from 3 to 30; and R^{fb} is -(CF₂)_{c'}H with c' being from 1 to 8, or -(CF₂)_{d'}F with d' being from 1 to 8; and
R¹O[CH(R⁰)(CH₂)₁ₐO]_{1b}R² (F)
wherein R⁰ is H or CH₃; R¹ is a fluorine-containing alkyl group or a substitution product thereof; R² is hydrogen or a lower alkyl group; 1a is from 1 to 3; and 1b is from 4 to 15.

33. A premix comprising a blowing agent and a polyol,
the blowing agent being a mixture comprising 1,1,1,3,3-pentafluoropropane and 1,1,1,3,3-pentafluorobutane, and the weight ratio of 1,1,1,3,3-pentafluoropropane/1,1,1,3,3-pentafluorobutane in the vapor phase of the premix being at least 1.5 at 25°C.

34. The premix according to claim 33, wherein the weight ratio of 1,1,1,3,3-pentafluoropropane/1,1,1,3,3-pentafluorobutane in the vapor phase of the premix is at least 1.7 at 25°C.

35. The premix according to claim 33, wherein the blowing agent is the mixture further comprising at least one halogen-containing compound with a boiling point of at least 15°C selected from the group consisting of halogenated hydrocarbons, halogenated alcohols and halogenated ethers.

36. The premix according to claim 35, wherein the vapor pressure at 40°C of the premix is 95% or less relative to the vapor pressure at 40°C of a premix which has the same weight ratio of the blowing agent and the same weight ratio of HFC-245fa to HFC-365mfc as the aforementioned premix except for not containing the halogen-containing compound with a boiling point of at least 15°C.

37. The premix according to claim 35, wherein the halogen-containing compound with a boiling point of at least 15°C is at least one compound selected from the group consisting of the compounds shown in (A)-(C) below:
(A) halogenated hydrocarbons with a boiling point of at least 15°C given in the group consisting of 3,3,4,4,5,5,6,6,6-nonafluoro-1-hexene, 2,3,3,4,4,5,5-heptafluoro-1-pentene, perfluoro-1-butene, perfluorohexene, perfluorononene, perfluorohexane, perfluorocyclobutane, 1,1,2,2,3,3,4,4-octafluorobutane, 1,1,1,2,2,3,4,5,5,5-decafluoropentane, 2-trifluoromethyl-1,1,1,2,3,4,5,5,5-nonafluoropentane, 2-trifluoromethyl-1,1,1,3,3,4,4,5,5,5-decafluoropentane, 1,1,2,2,3,3,4,4,5,5,6,6,6-tridecafluoropentane, 1,2,3,3,4,4-hexafluorocyclobutane, 2,3,3,4,4,5,5-pentafluorocyclopentane, 1,1,2,3,4,4-hexafluoro-1,2,3,4-tetrachlorobutane, 2,3-dichlorooctafluorobutane, 1,4-dichlorooctafluorobutane, 1-chloro-1,1,2,2,3,3,4,4-octafluorobutane, 1-chloro-1,1,2,2,3,3,4,4,5,5,6,6-dodecafluorohexane, 1,2-dichlorohexafluorocyclobutane, iodotrifluoromethyl, 1-iodononafluorobutane, 1-bromopropane and 2-bromobutane;
(B) halogenated alcohols with a boiling point of at least 15°C given in the group consisting of 1,1,1-trifluoroethanol, 1,1,1,2,2-pentafluoropropanol, 2,2,3,3-tetrafluoropropanol, 1,1,1,2,2-pentafluorobutanol, 1,1,1,2,3,3-hexafluorobutanol and 1,1,1,3,3,3-hexafluoro-2-ol; and
(C) halogenated ethers with a boiling point of at least 15°C given in the group consisting of 1,1,2,2-tetrafluoroethyl difluoromethyl ether, 1,1,2,2-tetrafluoroethyl methyl ether, 2,2,2-trifluoroethyl-1,1,2,2 tetrafluoroethylether, 1,1,2,3,3,3-hexafluoropropyl methyl ether, 2,2,3,3-tetrafluoropropyl 1,1,2,2-tetrafluoroethyl ether, 1,1,2,2-tetrafluoroethyl 2,2,3,3,3-pentafluoropropyl ether, 1,1,2,3,3,3-hexafluoropropyl 2,2,3,3,3-pentafluoropropyl ether, nonafluorobutyl methyl ether, nonafluorobutyl ethyl ether, 1-trifluoromethyl-1,2,2,2-tetrafluoroethyl methyl ether, perfluoropropyl methyl ether, 2,2,3,3,3-pentafluoropropyl difluoromethyl ether, 1,1,2,3,3,3-hexafluoropropyl 2,2,2-trifluoroethyl ether, 2,2,3,4,4,4-hexafluorobutyl difluoromethyl ether, 1,1,2,3,3,3-hexafluoropropyl 1,1,2,2-tetrafluoropropyl ether, 1,1,2,3,3-pentafluoro-2-trifluoromethyl methyl ether, perfluoropropylepoxide, 1,2,2-trifluoroethylene trifluoromethyl ether and 1,2,2-trifluoroethylene 1,1,2,2,3,3,3-heptafluoropropyl ether.

38. The premix according to claim 33, wherein the blowing agent is the mixture further comprising a glycol compound and/or a fluorine-containing surfactant.

39. The premix according to claim 38, wherein the vapor pressure at 40°C of the premix is 95% or less relative to the vapor pressure at 40°C of a premix which has the same component weight ratio as the aforementioned premix except for not containing the glycol compound and/or the fluorine-containing surfactant.

40. The premix according to claim 38, wherein the glycol compound is at least one member selected from the group consisting of compounds represented by formulae (A), (B) and (C):
CₐH₂ₐ₊₁(OCH₂CH₂O)_{b}C_{c}H_{2c+1} (A)
wherein a represents 0, 1, 2, 3 or 4; b represents 1, 2, 3 or 4; and c represents 0, 1, 2, 3 or 4;
C_{d}H_{2d+1}CO(OCH₂CH₂O)ₑCOC_{f}H_{2f+1} (B)
wherein d represents 0, 1, 2, 3 or 4; e represents 1, 2, 3 or 4; and f represents 0, 1, 2, 3 or 4; and
CᵢH₂ᵢ₊₁CO(OCH₂CH₂O)ⱼCₖH₂ₖ₊₁ (C)
wherein i represents 0, 1, 2, 3 or 4; j represents 1, 2, 3 or 4; and k represents 0, 1, 2, 3 or 4.

41. The premix according to claim 38, wherein the fluorine-containing surfactant is at least one member selected from the group consisting of compounds represented by formulae (D), (E) and (F):
HO[CH₂C(R)(CH₂OCH₂R^{fa})CH₂O]ₙH (D)
wherein n is from 3 to 30; R^{fa} is -(CF₂)_{a'}H with a' being from 1 to 8, or -(CF₂)_{b'}F with b' being from 1 to 8; and R is hydrogen or a lower alkyl group;
HO[CH(CH₂R^{fb})CH₂O]ₘH (E)
wherein m is from 3 to 30; and R^{fb} is -(CF₂)_{c'}H with c' being from 1 to 8, or -(CF₂)_{d'}F with d' being from 1 to 8; and
R¹O[CH(R⁰)(CH₂)₁ₐO]_{1b}R² (F)
wherein R⁰ is H or CH₃; R¹ is a fluorine-containing alkyl group or a substitution product thereof; R² is hydrogen or a lower alkyl group; 1a is from 1 to 3; and 1b is from 4 to 15.

42. The premix according to claim 33, wherein the blowing agent is the mixture further comprising:
(i) at least one halogen-containing compound with a boiling point of at least 15°C selected from the group consisting of halogenated hydrocarbons, halogenated alcohols and halogenated ethers; and
(ii) a glycol compound and/or a fluorine-containing surfactant.

43. The premix according to claim 42, wherein the vapor pressure at 40°C of the premix is 95% or less relative to the vapor pressure at 40°C of a premix which has the same component weight ratio as the aforementioned premix except for containing neither (i) the halogen-containing compound with a boiling point of at least 15°C nor (ii) the glycol compound and/or the fluorine-containing surfactant.

44. The premix according to claim 42, wherein the halogen-containing compound with a boiling point of at least 15°C is at least one compound selected from the group consisting of the compounds shown in (A)-(C) below:
(A) halogenated hydrocarbons with a boiling point of at least 15°C given in the group consisting of 3,3,4,4,5,5,6,6,6-nonafluoro-1-hexene, 2,3,3,4,4,5,5-heptafluoro-1-pentene, perfluoro-1-butene, perfluorohexene, perfluorononene, perfluorohexane, perfluorocyclobutane, 1,1,2,2,3,3,4,4-octafluorobutane, 1,1,1,2,2,3,4,5,5,5-decafluoropentane, 2-trifluoromethyl-1,1,1,2,3,4,5,5,5-nonafluoropentane, 2-trifluoromethyl-1,1,1,3,3,4,4,5,5,5-decafluoropentane, 1,1,2,2,3,3,4,4,5,5,6,6,6-tridecafluoropentane, 1,2,3,3,4,4-hexafluorocyclobutane, 2,3,3,4,4,5,5-pentafluorocyclopentane, 1,1,2,3,4,4-hexafluoro-1,2,3,4-tetrachlorobutane, 2,3-dichlorooctafluorobutane, 1,4-dichlorooctafluorobutane, 1-chloro-1,1,2,2,3,3,4,4-octafluorobutane, 1-chloro-1,1,2,2,3,3,4,4,5,5,6,6-dodecafluorohexane, 1,2-dichlorohexafluorocyclobutane, iodotrifluoromethyl, 1-iodononafluorobutane, 1-bromopropane and 2-bromobutane;
(B) halogenated alcohols with a boiling point of at least 15°C given in the group consisting of 1,1,1-trifluoroethanol, 1,1,1,2,2-pentafluoropropanol, 2,2,3,3-tetrafluoropropanol, 1,1,1,2,2-pentafluorobutanol, 1,1,1,2,3,3-hexafluorobutanol and 1,1,1,3,3,3-hexafluoro-2-ol; and
(C) halogenated ethers with a boiling point of at least 15°C given in the group consisting of 1,1,2,2-tetrafluoroethyl difluoromethyl ether, 1,1,2,2-tetrafluoroethyl methyl ether, 2,2,2-trifluoroethyl-1,1,2,2 tetrafluoroethylether, 1,1,2,3,3,3-hexafluoropropyl methyl ether, 2,2,3,3-tetrafluoropropyl 1,1,2,2-tetrafluoroethyl ether, 1,1,2,2-tetrafluoroethyl 2,2,3,3,3-pentafluoropropyl ether, 1,1,2,3,3,3-hexafluoropropyl 2,2,3,3,3-pentafluoropropyl ether, nonafluorobutyl methyl ether, nonafluorobutyl ethyl ether, 1-trifluoromethyl-1,2,2,2-tetrafluoroethyl methyl ether, perfluoropropyl methyl ether, 2,2,3,3,3-pentafluoropropyl difluoromethyl ether, 1,1,2,3,3,3-hexafluoropropyl 2,2,2-trifluoroethyl ether, 2,2,3,4,4,4-hexafluorobutyl difluoromethyl ether, 1,1,2,3,3,3-hexafluoropropyl 1,1,2,2-tetrafluoropropyl ether, 1,1,2,3,3-pentafluoro-2-trifluoromethyl methyl ether, perfluoropropylepoxide, 1,2,2-trifluoroethylene trifluoromethyl ether and 1,2,2-trifluoroethylene 1,1,2,2,3,3,3-heptafluoropropyl ether.

45. The premix according to claim 42, wherein the glycol compound is at least one member selected from the group consisting of compounds represented by formulae (A), (B) and (C):
CₐH₂ₐ₊₁(OCH₂CH₂O)_{b}C_{c}H_{2c+1} (A)
wherein a represents 0, 1, 2, 3 or 4; b represents 1, 2, 3 or 4; and c represents 0, 1, 2, 3 or 4;
C_{d}H_{2d+1}CO(OCH₂CH₂O)ₑCOC_{f}H_{2f+1} (B)
wherein d represents 0, 1, 2, 3 or 4; e represents 1, 2, 3 or 4; and f represents 0, 1, 2, 3 or 4; and
CᵢH₂ᵢ₊₁CO(OCH₂CH₂O)ⱼCₖH₂ₖ₊₁ (C)
wherein i represents 0, 1, 2, 3 or 4; j represents 1, 2, 3 or 4; and k represents 0, 1, 2, 3 or 4.

46. The premix according to claim 42, wherein the fluorine-containing surfactant is at least one member selected from the group consisting of compounds represented by formulae (D), (E) and (F):
HO[CH₂C(R)(CH₂OCH₂R^{fa})CH₂O]ₙH (D)
wherein n is from 3 to 30; R^{fa} is -(CF₂)_{a'}H with a' being from 1 to 8, or -(CF₂)_{b'}F with b' being from 1 to 8; and R is hydrogen or a lower alkyl group;
HO[CH(CH₂R^{fb})CH₂O]ₘH (E)
wherein m is from 3 to 30; and R^{fb} is -(CF₂)_{c'}H with c' being from 1 to 8, or -(CF₂)_{d'}F with d' being from 1 to 8; and
R¹O[CH(R⁰)(CH₂)₁ₐO]_{1b}R² (F)
wherein R⁰ is H or CH₃; R¹ is a fluorine-containing alkyl group or a substitution product thereof; R² is hydrogen or a lower alkyl group; 1a is from 1 to 3; and 1b is from 4 to 15.
